# EUROPÄISCHE PATENTSCHRIFT

(11) **EP 2 237 869 B1**
(45) Veröffentlichungstag und Bekanntmachung des Hinweises auf die Patenterteilung: **31.08.2011**
(21) Anmeldenummer: 09703667.7
(22) Anmeldetag: 21.01.2009
(51) Int. Cl.: B01J 8/00, B01J 8/06

(54) **REAKTOR ZUR DURCHFÜHRUNG VON HOCHDRUCKREAKTIONEN, VERFAHREN ZUR INBETRIEBNAHME SOWIE VERFAHREN ZUR DURCHFÜHRUNG EINER REAKTION**
REACTOR FOR CARRYING OUT HIGH PRESSURE REACTIONS, METHOD FOR STARTING AND METHOD FOR CARRYING OUT A REACTION
RÉACTEUR PERMETTANT LA MISE EN OEUVRE DE RÉACTIONS SOUS HAUTE PRESSION, PROCÉDÉ DE MISE EN ROUTE ET PROCÉDÉ DE MISE EN OEUVRE D'UNE RÉACTION

(30) Priorität: 25.01.2008 EP 08150677; 16.07.2008 EP 08160471
(43) Veröffentlichungstag der Anmeldung: 13.10.2010
(73) Patentinhaber: BASF SE, 67056 Ludwigshafen (DE)
(72) Erfinder: SCHMIDTKE, Helmut, 64625 Bensheim (DE); RUPPEL, Wilhelm, 68163 Mannheim (DE); BERRSCHE, Helmut, 67454 Hassloch (DE); MELDER, Johann-Peter, 67459 Böhl-Iggelheim (DE); RHEUDE, Udo, 67166 Otterstadt (DE); KUBANEK, Petr, 68163 Mannheim (DE); RUF, Gerhard, 67227 Frankenthal (DE); GUNKEL, Wolfgang, 68305 Mannheim (DE); MÄGERLEIN, Wolfgang, 68165 Mannheim (DE); ROSS, Karl-Heinz, 67269 Grünstadt (DE)
(86) Internationale Anmeldenummer: PCT/EP2009/050642
(87) Internationale Veröffentlichungsnummer: WO 2009/092724

(56) Entgegenhaltungen:
- WO-A-03/057358
- WO-A-2004/052777
- US-A- 4 221 763

## Beschreibung

Die Erfindung betrifft einen Reaktor zur Durchführung von Hochdruckreaktionen, umfassend mindestens ein Rohr, das mit seinen Enden jeweils durch eine Rohrplatte geführt ist und mit der Rohrplatte verbunden ist, wobei die Rohrplatten und das mindestens eine Rohr von einem Außenmantel umschlossen sind, so dass zwischen dem Rohr und dem Außenmantel ein Außenraum ausgebildet ist. Weiterhin betrifft die Erfindung ein Verfahren zur Inbetriebnahme des Reaktors, wobei das mindestens eine Rohr mit einem Katalysator befüllt ist, der durch eine Reduktion mit Wasserstoff aktiviert wird. Schließlich betrifft die Erfindung auch ein Verfahren zur Durchführung einer exothermen Reaktion in dem Reaktor.

Derzeit werden Hochdruckreaktionen im Allgemeinen in adiabaten Hochdrucköfen durchgeführt. Diese sind zur Umgebung hin isoliert und der sich einstellende Temperaturverlauf ergibt sich aus dem Umsatz an Edukten. Wenn jedoch zum Beispiel durch Ausfall der Energieversorgung die Zufuhr der Edukte nicht mehr sichergestellt werden kann, kann es bei einigen Reaktionen zu einem unkontrollierten Durchgehen kommen. Dies kann insbesondere zu einer starken Temperaturerhöhung führen. Diese geht gegebenenfalls mit einer starken Druckentwicklung einher, die zu einem Bersten des Reaktors führen kann.

Ein weiterer Nachteil der aus dem Stand der Technik bekannten Hochdruckreaktoren ist, dass aufgrund von regelungsbedingten Schwankungen im Eingang zum Hochdruckreaktor eine schwankende Temperaturverteilung auftritt und damit die Zusammensetzung des Austrages ebenfalls Schwankungen aufweist.

Dickwandige Behälter zur adiabaten Reaktionsführung bei Drücken bis zu 1000 bar sind zum Beispiel in S. Maier, F.J. Müller, "Reaktionstechnik bei industriellen Hochdruckverfahren", CIT 58, 1986, S. 287 bis 296 beschrieben. Typische Anwendungen sind Hydrierungen und Aminierungen bei 200 bar und die Kohlehydrierung bei 700 bar. Für noch höhere Drücke wird ein langes dünnes Hochdruckrohr mit Wandkühlung eingesetzt, das sich jedoch nicht für heterogen katalysierte Synthesen eignet.

Gegenüber adiabaten Hochdrucköfen haben Rohrbündelreaktoren den Vorteil, dass entlang der Rohrachse ein nahezu isothermes Temperaturprofil eingestellt werden kann und damit eine bessere Ausnutzung des Katalysatorbettes und sehr schwankungsarme Synthesebedingungen möglich sind. Ein hoher Druck auf der Rohrinnenseite ist jedoch ungünstig, da die Rohre auf Knickung beansprucht werden. Es sind sehr mächtige Hauben und Rohrplatten erforderlich, was dazu führt, dass der Reaktor in der bisher üblichen Konstruktionsweise sehr teuer bzw. nicht mehr realisierbar ist. In der Praxis ist der Einsatz von Rohrbündelreaktoren deshalb derzeit auf den Mitteldruckbereich bis 100 bar beschränkt.

Um auch bei hohem Druck die Vorteile eines Rohrbündelreaktors zu nutzen, ist zum Beispiel in US 4,221,763 ein Reaktor mit einem Hochdruckbehälter beschrieben, in den ein Rohrbündel hineingebaut ist. Dabei soll das Kühlmittel jeweils den gleichen Druck aufweisen wie der Druck an der Rohrinnenseite, so dass die Einbauten auch filigran sein können. Wie der Druckausgleich zwischen Rohrinnenseite und Kühlmittelseite erfolgt, ist jedoch nicht beschrieben.

Dieses Prinzip ist auch aus der Ammoniaksynthese bekannt. Bei dem sogenannten "Leuna-Ofen", wie er zum Beispiel aus H. Buchter, "Apparate und Armaturen der Chemischen Hochdrucktechnik", Springer-Verlag 1967, Kap. VI, Abschnitt III, Seiten 240 bis 254 beschrieben ist, befindet sich ein Rohrbündel in einem Hochdruckbehälter. Der Katalysator ist in den Rohren aufgenommen. Um die Rohre strömt vorgewärmtes Synthesegas als Kühlmittel. Damit besteht nur ein kleiner Druckunterschied zwischen Rohrinnenseite und Rohraußenseite, der bestimmt wird durch den Druckabfall an der Katalysatorschüttung. Die Funktion ist somit auch bei Schwankungen des Betriebsdruckes, der üblicherweise bei 221 bar liegt, gewährleistet.

Aufgabe der vorliegenden Erfindung ist es, einen Reaktor zur Durchführung von Hochdruckreaktionen bereitzustellen, der ein gleichmäßiges Temperaturprofil aufweist und damit nicht die Nachteile der aus dem Stand der Technik bekannten Hochdruckreaktoren hat. Eine weitere Aufgabe ist es, einen Reaktor zur Durchführung von Hochdruckreaktionen bereitzustellen, der auch bei Ausfall der Energieversorgung sicher betrieben werden kann.

Gelöst wird die Aufgabe durch einen Reaktor zur Durchführung von Hochdruckreaktionen, umfassend mindestens ein Rohr, das mit seinen Enden jeweils durch eine Rohrplatte geführt ist und mit der Rohrplatte verbunden ist, wobei die Rohrplatten und das mindestens eine Rohr von einem Außenmantel umschlossen sind, so dass zwischen dem Rohr und dem Außenmantel ein Außenraum ausgebildet ist. Die Rohrplatten weisen jeweils mindestens eine Oberfläche aus einer Nickel-Basislegierung auf. Das mindestens eine Rohr ist jeweils an die Oberfläche aus der Nickel-Basislegierung angeschweißt, wobei die Oberfläche aus der Nickel-Basislegierung jeweils in Richtung des jeweiligen Reaktorendes weist. Der Außenmantel weist eine Dicke auf, die ausreichend ist, bei einer unterschiedlichen Ausdehnung aufgrund einer Temperaturdifferenz zwischen Rohr und Außenmantel auftretende Zugkräfte aufzunehmen.

Hochdruckreaktion im Sinne der vorliegenden Erfindung bedeutet, dass Apparate und Maschinen für einen Druckbereich von 100 bis 325 bar ausgelegt sind. Die Reaktion kann innerhalb dieses Druckbereiches oder aber auch bei einem Druck von weniger als 100 bar erfolgen.

Vorteil des Außenmantels, der eine Dicke aufweist, die ausreichend ist, bei einer unterschiedlichen Dehnung aufgrund einer Temperaturdifferenz zwischen Rohr und Außenmantel auftretende Zugkräfte aufzunehmen, ist, dass im Außenmantel kein Kompensator vorgesehen werden muss. Ein derartiger Kompensator hat üblicherweise die Form eines in axialer Richtung stauch- und dehnbaren Balges, der im Außenmantel aufgenommen ist. Ein derartiger Kompensator hat jedoch zur Folge, dass eine Druckkraft, die auf den Außenmantel wirkt, von diesem nicht aufgenommen werden kann, da sich der Kompensator verformt. Durch den Verzicht auf den Kompensator können auf den Außenmantel wirkende Druckkräfte aufgenommen werden. Diese ergeben sich zum Beispiel durch die Masse der Rohrplatten und die Deckel des Reaktors.

Die Dicke des Außenmantels ist davon abhängig, wie groß die maximal auftretende Temperaturdifferenz zwischen dem Rohrinneren und dem Außenmantel ist. Je größer die Temperaturdifferenz ist, umso unterschiedlicher ist die Längenausdehnung aufgrund der Temperatur. Bei einer exothermen Reaktion sind die Rohre im Allgemeinen wärmer als der Außenmantel. Das heißt, dass sich die Rohre stärker ausdehnen als der Außenmantel. Hierdurch tritt eine Durchbiegung der Rohrplatte auf. Diese führt zu einer Zugkraft, die auf den Außenmantel wirkt. Diese Zugkraft muss vom Außenmantel aufgenommen werden können.

Die notwendige Dicke des Außenmantels ist weiterhin auch abhängig vom Durchmesser des Reaktors und der Länge der Rohre. Je größer der Durchmesser des Reaktors ist und je länger die Rohre sind, umso dicker muss der Außenmantel sein.

So ergibt sich zum Beispiel bei einem Durchmesser der Rohrplatte von 2,35 m und einer Rohrlänge von 12 m eine minimale Wanddicke des Außenmantels von 25 mm für eine Temperaturdifferenz von bis zu 30 K zwischen dem Rohrinneren und der Temperatur an der Außenseite des Außenmantels. Bei einer Temperaturdifferenz zwischen Rohrinnerem und Außenseite des Außenmantels von bis zu 45 K ergibt sich zum Beispiel eine Wanddicke von mindestens 35 mm, und eine Temperaturdifferenz von bis zu 60 K erfordert beispielsweise eine Wanddicke des Außenmantels von mindestens 70 mm. Bei entsprechend kleinerem Reaktordurchmesser bzw. kürzeren Rohren bei gleicher Temperaturdifferenz kann die Dicke der Außenwand jeweils etwas kleiner gewählt werden. Entsprechend wäre die Wanddicke des Außenmantels bei einem größeren Reaktordurchmesser oder längeren Rohren noch größer zu wählen.

In einer bevorzugten Ausführungsform ist die Nickel-Basislegierung als Plattierung auf die Rohrplatten aufgetragen. Vorteil des Auftragens der Nickel-Basislegierung als Plattierung auf die Rohrplatten ist, dass dies erlaubt, die Rohrplatten aus jedem beliebigen Material mit Kostenvorteilen zu fertigen. Bevorzugt werden die Rohrplatten aus niedrig legierten, warmfesten Stählen gefertigt. Vorteil des Einsatzes von niedrig legierten, warmfesten Stählen für die Rohrplatten ist, dass sich dieser leichter schmieden lässt als eine Nickel-Basislegierung und somit die Fertigung der Rohrplatte vereinfacht wird. Im Unterschied zu den niedrig legierten, warmfesten Stählen ist die Nickel-Basislegierung leichter schweißbar, so dass die Rohre durch die Nickel-Basislegierung leichter eingeschweißt werden können. Der Auftrag der Plattierung aus der Nickel-Basislegierung erfolgt üblicherweise durch Aufschweißen, Walzen oder Sprengplattieren. Hierzu wird die Nickel-Basislegierung z.B. als Schweißzusatz in Form von Schweißraupen auf die Rohrplatte aufgetragen. Um die gewünschte Dicke der Plattierung zu erzielen, kann auch ein Aufschweißen in mehreren Lagen erfolgen. Nach dem Aufbringen der Nickel-Basislegierung wird die Oberfläche vorzugsweise z.B. durch geeignete Schleifprozesse geglättet.

Geeignete Kohlenstoffstähle, aus denen die Rohrplatte gefertigt werden kann, sind zum Beispiel 12 CrMo 9-10 und 24 CrMo 10 (Werkstoffbezeichnung gemäß DIN). Neben Kohlenstoffstählen eignen sich zur Herstellung der Rohrplatte grundsätzlich jedoch auch Edelstähle wie z. B. X6 CrMoNiTi 17-12-2 und X3 CrNiMoN 17-13-5, bei denen dann auf eine Plattierung mit Nickelbasis-Werkstoffen verzichtet wird und die Rohreinschweißung direkt an der Platte erfolgt.

Geeignete Nickel-Basislegierungen sind zum Beispiel NiCr21Mo und NiCr15Fe.

Die Plattierung weist vorzugsweise eine Dicke von bis zu 30 mm auf. Die Dicke der Plattierung ist dabei abhängig von der Dicke der Rohrwandungen und der sich daraus ergebenden Tiefe der Schweißnaht. Die Dicke der Plattierung wird so gewählt, dass die Höhe der Schweißwurzel kleiner als die Dicke der Plattierung ist. Hierdurch wird gewährleistet, dass die Schweißnaht nicht bis in das Material der Rohrplatte hineinreicht. Ein weiterer Vorteil dieser Plattierungsdicke ist, dass ein Auswechseln der Rohre ermöglicht wird, ohne dass die Plattierung erneuert werden muss bzw. ohne dass eine Wärmebehandlung des Apparates zum Abbau der durch das Einschweißen aufgetretenen Spannungen durchgeführt werden muss.

Das mindestens eine im Reaktor eingesetzte Rohr weist vorzugsweise eine Länge im Bereich von 3000 bis 18000 mm auf. Die gewählte Rohrlänge ist dabei abhängig von der Geschwindigkeit des Reaktionsmediums und der gewünschten Verweilzeit. Je größer die Verweilzeit sein soll und je höher die Geschwindigkeit ist, umso länger müssen die Rohre sein. Der erfindungsgemäß ausgebildete Reaktor erlaubt auch bei einer Rohrlänge von bis zu 18000 mm einen Aufbau des Außenmantels ohne Kompensator.

In Abhängigkeit vom gewünschten Durchsatz und der dafür notwendigen Anzahl der einzelnen Rohre im Reaktor weist die Rohrplatte vorzugsweise einen Durchmesser von bis zu 2400 mm und eine Dicke von bis zu 600 mm auf. Der Durchmesser der Rohrplatte ergibt sich dabei aus der Anzahl der einzusetzenden Rohre, um den gewünschten Durchsatz zu erzielen. Vorteil von mehreren Rohren mit einem vergleichsweise kleinen Durchmesser im Unterschied zu einem Rohr mit einem großen Durchmesser ist es, dass in einem Rohr mit einem kleineren Durchmesser eine bessere Temperierung durch ein Temperiermittel, welches an der Rohraußenseite strömt, möglich ist. Bei einem größeren Rohrdurchmesser wäre es gegebenenfalls notwendig, innerhalb des Rohres einen Wärmetauscher vorzusehen. Dies ist jedoch von der Konstruktion her aufwendig.

Die Dicke der Rohrplatte ist abhängig vom Durchmesser der Rohrplatte und der Länge der eingesetzten Rohre. Da durch unterschiedliche Temperaturausdehnungen von Außenmantel und Rohren bei unterschiedlichen Temperaturen auf die Rohrplatte eine Kraft ausgeübt wird, muss diese hinreichend stark bemessen sein, um die auf sie wirkenden Kräfte aufnehmen zu können. So muss die Dicke der Rohrplatte insbesondere so gewählt werden, dass diese sich nicht allein aufgrund ihres Eigengewichtes verformt.

Als Werkstoff für das mindestens eine Rohr wird vorzugsweise ein austenitischer Werkstoff oder ein ferritisch-austenitischer Werkstoff eingesetzt. Geeignete austenitische Werkstoffe sind zum Beispiel X6 CrNiMoTi 17-12-2, X3 CrNiMoN 17-13-5 und X2 CrNiMoN 25-22. Ein geeigneter ferritisch-austenitischer Werkstoff ist z. B. X 2CrNiMoN 22-5-3. Der Vorteil von austenitischen Werkstoffen ist, dass diese im Allgemeinen sehr zäh und korrosionsbeständig sind. Aus diesem Grund lassen sich austenitische Werkstoffe sehr gut verformen. Dies führt dazu, dass auch bei Zug- oder Druckbelastung auf die Rohre, zum Beispiel aufgrund unterschiedlicher Wärmeausdehnung aufgrund von Temperaturdifferenzen zwischen Rohrinnerem und Außenmantel, keine Beschädigungen an den Rohren auftreten. Durch die Korrosionsbeständigkeit wird vermieden, dass die Rohre aufgrund von Korrosion geschwächt werden. Der Vorteil des ferritisch-austenitischen Werkstoffes besteht darin, dass er zusätzlich eine erhöhte Festigkeit besitzt. Neben austenitischen Werkstoffen eignen sich jedoch auch zum Beispiel Nickelbasiswerkstoffe wie NiCr21 Mo und NiCr15 Fe als Material für die Rohre.

Bei Reaktionen, die in Gegenwart eines heterogenen Katalysators durchgeführt werden, sind die Rohre mit dem im Allgemeinen als Feststoff vorliegenden Katalysator gefüllt. Der Katalysator kann dabei zum Beispiel in Form einer Schüttung, als Füllkörper oder als strukturierte Packung vorliegen. Wenn der Katalysator als Granulat oder Füllkörper-Schüttung vorliegt, so ist vorzugsweise im Rohr mindestens ein Boden vorgesehen, auf dem der Katalysator aufliegt. Der Boden ist dabei zum Beispiel als Lochboden oder als Siebboden ausgeführt.

Um ein vereinfachtes Entnehmen des Katalysators aus dem mindestens einen Rohr zu ermöglichen, ist es bevorzugt, die Katalysator-Füllung durch Federelemente abzustützen. Als Federelemente werden vorzugsweise als Spiralfeder ausgebildete Druckfedern eingesetzt, wobei diese vorzugsweise kegelförmig ausgebildet sind. Die Federelemente ermöglichen es zum Beispiel auch, den Katalysator bei senkrecht stehendem Reaktor an der Unterseite zu entnehmen, indem der Boden des Reaktors entfernt wird. Dies erlaubt eine einfachere Entnahme des Katalysators als ein Absaugen von der Oberseite des Reaktors.

Wenn die Reaktion, die in dem Reaktor durchgeführt wird, nicht in Gegenwart eines heterogenen Katalysators durchgeführt wird, oder der Katalysator mit dem Reaktionsgemisch mitgeführt wird, ist es alternativ auch möglich, in den einzelnen Rohren Einbauten zur Strömungsvergleichmäßigung vorzusehen. Derartige Einbauten können zum Beispiel auch eine Füllkörperschüttung oder eine strukturierte Packung sein, alternativ ist es jedoch auch möglich, dass als Einbauten zum Beispiel Böden im Rohr vorgesehen sind. Derartige Böden sind zum Beispiel Lochböden oder Siebböden. Bei einem mehrphasigen Reaktionsgemisch, insbesondere einem Gas-Flüssig-Gemisch, ist es notwendig, dass die Einbauten bzw. der Katalysator so ausgebildet sind, dass die enthaltenen Gasblasen durch den Katalysator bzw. die Einbauten nicht aufgestaut werden. Ein Zerkleinern der Blasen und damit eine gleichmäßige Gasverteilung in der Flüssigkeit ist jedoch gewünscht.

In einer besonders bevorzugten Ausführungsform ist der Außenraum des Reaktors mit einem Temperiermittel-Kreislauf verbunden. Der Temperiermittel-Kreislauf umfasst vorzugsweise einen Vorratsbehälter für das Temperiermittel. Der Vorratsbehälter ist hierbei mindestens in einer solchen Höhe angeordnet, dass das Temperiermittel aufgrund des hydraulischen Drucks der Flüssigkeit den Außenraum des Reaktors durchströmen kann. Vorteil der Anordnung des Vorratsbehälters derart, dass das Temperiermittel den Außenraum aufgrund des hydraulischen Drucks durchströmen kann, ist, dass auch bei Ausfall der Energieversorgung, zum Beispiel wenn sich eine Pumpe nicht mehr betreiben lässt, eine Temperierung des Reaktors möglich ist. So kann zum Beispiel durch das Temperiermittel der Reaktor gekühlt werden, um ein unkontrolliertes Durchgehen der Reaktion zu verhindern. Die Anordnung des Vorratsbehälters ist dabei vorzugsweise derart, dass der Flüssigkeitsspiegel im Vorratsbehälter mindestens auf gleicher Höhe ist wie der Flüssigkeitsspiegel im Außenraum des Reaktors.

Der Temperiermittelkreislauf kann dabei als geschlossener Kreislauf oder als offener Kreislauf ausgestaltet sein. Insbesondere wenn als Temperiermittel zum Beispiel Kühlmittel oder Thermalöle eingesetzt werden, ist es bevorzugt, einen geschlossenen Kreislauf einzusetzen. Beim Einsatz von Wasser als Temperiermittel ist es auch möglich, einen offenen Kreislauf zu verwenden. Bei einem offenen Kreislauf wird das Temperiermittel aus dem Vorratsbehälter durch den Außenraum des Reaktors geführt und von dort aus dem Kreislauf abgegeben. Das Temperiermittel kann dann zum Beispiel in einem Auffangbehälter aufgefangen werden oder beispielsweise als Heizmedium in einem Wärmetauscher eingesetzt werden. Wenn als Temperiermedium zum Beispiel Wasser eingesetzt wird und dieses im Außenraum des Reaktors aufgrund der von der Reaktion aufgenommenen Wärme verdampft, so lässt sich der entstehende Wasserdampf zum Beispiel als Heizdampf für weitere Prozesse einsetzen. Wenn der Dampf nicht benötigt wird, ist es auch möglich, diesen zum Beispiel an die Umgebung abzugeben. Bei einem geschlossenen Temperiermittel-Kreislauf ist es bevorzugt, wenn sich an den Reaktor ein Wärmetauscher anschließt, in dem das Temperiermittel wieder gekühlt wird, bevor dieses erneut im Vorratsbehälter gesammelt wird.

Der Vorratsbehälter ist vorzugsweise so bemessen, dass bei einem Ausfall der Energieversorgung ausreichend Temperiermittel vorhanden ist, um ein Herunterkühlen des Reaktors auf eine unkritische Temperatur zu ermöglichen.

Um den Strömungsverlauf im Außenraum des Reaktors einstellen zu können, ist es bevorzugt, wenn im Außenraum Einbauten angeordnet sind. Geeignete Einbauten sind zum Beispiel Lochbleche und/oder Umlenkbleche. Weiterhin eignen sich als Einbauten jedoch auch zum Beispiel Schüttungen oder Packungen oder beliebige andere Böden. Weiterhin geeignet und bevorzugt ist der Einsatz von Stützgittern. Diese haben den Vorteil, dass sie einen sehr geringen Druckverlust in Strömungsrichtung aufweisen. Wenn das Temperiermittel im Außenraum des Reaktors aufgrund der von der Reaktion aufgenommenen Wärme verdampft, so ist es bevorzugt, wenn die Einbauten so ausgestaltet sind, dass entstehende Dampfblasen nicht durch die Einbauten aufgestaut werden.

Wenn zur Vergleichmäßigung der Strömung des Temperiermittels im Außenraum des Reaktors Lochbleche eingesetzt werden, so beträgt der Abstand zwischen den einzelnen Lochblechen vorzugsweise 400 bis 700 mm. Insbesondere liegt der Abstand zwischen den Lochblechen bei 500 mm.

Wenn im Temperiermittel-Kreislauf eine Pumpe eingesetzt wird, um einen Zwangsumlauf des Temperiermittels zu erzielen, so ist die Pumpe vorzugsweise eine Freilaufpumpe. Vorteil des Einsatzes einer Freilaufpumpe ist es, dass bei einem Energieausfall das Temperiermittel aus dem Vorratsbehälter die Pumpe durchströmen kann, ohne dass diese dem Temperiermittel einen großen Widerstand entgegensetzt, der zu einem starken Druckabfall führt. Hierdurch wird das Durchströmen des Reaktors mit dem Temperiermedium auch bei einem Energieausfall sichergestellt. Geeignete Freilaufpumpen sind zum Beispiel Pumpen mit zurückgezogenem Laufrad. Weiterhin eignet sich jede dem Fachmann bekannte Pumpe, die einen freien Querschnitt hat, so dass die Pumpe durchströmt werden kann, wenn diese nicht betätigt wird.

Zur Überwachung der Temperatur ist es bevorzugt, wenn im Inneren des mindestens einen Rohres und am Außenmantel Thermoelemente angeordnet sind. Mit den Thermoelementen lässt sich die Temperatur im Inneren des Rohres und die Temperatur am Außenmantel erfassen. Hieraus kann die Temperaturdifferenz gebildet werden. Da der Reaktor, insbesondere die Dicke des Außenmantels des Reaktors, vorzugsweise auf eine maximale Temperaturdifferenz zwischen dem Rohrinneren und der Außenwand des Außenmantels ausgelegt ist, lässt sich mittels der Thermoelemente diese Temperaturdifferenz überwachen. Bei einer Annäherung an die maximal zulässige Temperaturdifferenz bzw. einem Überschreiten der maximal zulässigen Temperaturdifferenz kann zum Beispiel mehr Temperiermittel durch den Außenraum des Reaktors geführt werden, um eine stärkere Kühlung der Rohre und damit ein Abkühlen im Rohrinneren zu erzielen. Alternativ wäre es auch möglich, durch ein gezieltes Erwärmen des Außenmantels die Temperaturdifferenz zwischen dem Inneren des mindestens einen Rohres und dem Außenmantel zu verringern, um wieder in den Bereich der zulässigen Temperaturdifferenz zu gelangen. Dies ist notwendig, da bei einem Überschreiten der maximal zulässigen Temperaturdifferenz der Reaktor beschädigt werden kann.

Um einen hinreichend großen Durchsatz zu ermöglichen, ist der Reaktor vorzugsweise ein Rohrbündelreaktor. Unter Rohrbündelreaktor wird im Sinne der vorliegenden Erfindung ein Reaktor mit mindestens zwei Rohren verstanden. Üblicherweise weist ein Rohrbündelreaktor jedoch mindestens fünf Rohre auf. Die maximale Anzahl der Rohre ist dabei abhängig vom Außendurchmesser der Rohre und dem Durchmesser der Rohrplatten und damit dem Durchmesser des Reaktors. Je größer der Durchmesser des Reaktors ist und je kleiner der Durchmesser der Rohre ist, umso mehr Rohre können enthalten sein.

Um zu vermeiden, dass manche Rohre stärker und andere weniger stark vom Reaktionsmedium durchströmt werden, ist es bevorzugt, im Einlaufbereich der Rohre des Rohrbündelreaktors Einbauten vorzusehen, durch die die zugeführten Edukte gleichmäßig auf die Rohre verteilt werden. Als Einbauten zur Vergleichmäßigung der Verteilung der Edukte auf die einzelnen Rohre sind zum Beispiel poröse Sinterplatten, Lochplatten und Siebböden bekannt. Auch können Leitbleche eingesetzt werden, durch die ein auftreffender Gasstrahl in einzelne Blasen bzw. Strahlen geteilt wird. Auch ist es zum Beispiel möglich, Ringverteiler einzusetzen. Besonders bevorzugt wird zur Vergleichmäßigung der Verteilung der Edukte jedoch eine Verteilervorrichtung eingesetzt, bei der eine horizontal im Apparat angeordnete Verteilerplatte eine aktive Fläche mit Durchgangsöffnungen und einen sich nach unten erstreckenden Rand umfasst, wobei sich die Verteilerplatte nicht über den gesamten Querschnitt des Reaktors erstreckt. Die Verteilervorrichtung kann durch eine zweite Verteilerplatte ergänzt werden, die zwischen der Zufuhröffnung für die Edukte und der ersten Verteilerplatte angeordnet ist. Auch die zweite Verteilerplatte umfasst eine aktive Fläche mit einer Vielzahl von Durchgangsöffnungen und einen sich nach unten erstreckenden Rand. Die zweite Verteilerplatte fungiert dabei weitgehend als Vorverteiler. Eine derartige Verteilervorrichtung ist zum Beispiel aus WO 2007/045574 bekannt.

Im Allgemeinen wird der Reaktor so eingesetzt, dass das mindestens eine Rohr in vertikaler Richtung verläuft. Hierzu ist es üblich, den Reaktor in einem Apparategerüst einzusetzen. Der Reaktor ist dabei üblicherweise frei hängend im Apparategerüst aufgenommen, so dass ein oberer Deckel und ein unterer Deckel, mit denen der Reaktor verschlossen ist, frei zugänglich sind. Durch Entfernen des oberen Deckels bzw. des unteren Deckels ist es zum Beispiel möglich, den in dem mindestens einen Rohr enthaltenen Katalysator zu wechseln.

Um eine gleichmäßige Temperatur im Rohrinneren zu erhalten und zu vermeiden, dass sich das Reaktionsmedium, welches die Rohre durchströmt, zur Rohrmitte hin im Vergleich zur Rohrwand sehr stark aufheizt, ist es bevorzugt, Rohre mit einem Innendurchmesser im Bereich von 30 bis 150 mm einzusetzen. Besonders bevorzugt werden Rohre mit einem Innendurchmesser im Bereich von 35 bis 50 mm, beispielsweise von 42,7 mm, eingesetzt. Um einen ausreichend guten Wärmeübergang zwischen dem Rohrinneren und dem Temperiermedium im Außenraum zu erhalten, bei gleichzeitig ausreichender Festigkeit der Rohre, werden vorzugsweise Rohre mit einer Wandstärke von 5 bis 15 mm, insbesondere mit einer Wandstärke von 7 bis 11 mm, beispielsweise mit einer Wandstärke von 8,8 mm, eingesetzt. Eine große Anzahl von Rohren kann im Reaktor untergebracht werden, wenn diese in Dreieckteilung angeordnet sind. Bei Einsatz von Rohren mit einem Außendurchmesser von 60,3 mm beträgt der Achsabstand beispielsweise 75,4 mm.

Der erfindungsgemäße Reaktor eignet sich insbesondere zur Durchführung von Reaktionen bei Temperaturen im Bereich von 130 bis 300°C, insbesondere im Bereich von 150 bis 270°C. Reaktionen, die in dem erfindungsgemäßen Reaktor durchgeführt werden können, sind zum Beispiel die Herstellung von Aminodiglykol und Morpholin, die Synthese von Polyetheraminen, von C₁-C₄-Alkylaminen und die Synthese von Cyclododecanon. Vorteil ist, dass diese Reaktionen durch Einsatz des erfindungsgemäßen Reaktors bei höheren Temperaturen durchgeführt werden können und somit z.B. auch weniger aktive und im Allgemeinen günstigere Katalysatoren verwendet werden können.

Die Erfindung betrifft weiterhin ein Verfahren zur Inbetriebnahme des Reaktors. Hierbei ist das mindestens eine Rohr des Reaktors mit einem Katalysator gefüllt, der durch eine Hydrierung mit Wasserstoff aktiviert wird. Als Temperiermittel wird Wasser eingesetzt und die Wärmezufuhr erfolgt mit Hilfe von Wasserdampf. Das Verfahren umfasst folgende Schritte:
(a) Aufheizen des Katalysators auf eine Temperatur im Bereich von 120 bis 170 °C bei einem Druck im Bereich von 120 bis 170 bar in Gegenwart einer Stickstoffatmosphäre mit einer Rate von 5 bis 15 K/h und gleichzeitiges Erhöhen der Temperatur des Wassers im Außenraum durch Zufuhr von Heizdampf und Erhöhung des Drucks, so dass die Siedetemperatur des Wassers im Außenraum der Temperatur dem Inneren des Rohres entspricht,
(b) Zufuhr von Wasserstoff, bis eine Konzentration an Wasserstoff von 1 bis 3 Vol.-% erreicht ist und Halten der Atmosphäre für einen Zeitraum von 5 bis 8 h, danach Erhöhen der Wasserstoffkonzentration auf 4 bis 6 Vol.-% und Halten der Atmosphäre für einen Zeitraum von 5 bis 8 h,
(c) Erhöhen der Wasserstoffkonzentration auf 8 bis 12 Vol.-% und Halten der Konzentration, bis die Temperatur im Reaktorbett im Wesentlichen konstant bleibt, danach Erhöhen der Wasserstoffkonzentration auf 45 bis 55 Vol.-%,
(d) Erhöhen des Drucks im Innenraum des mindestens einen Rohres auf 150 bis 250 bar und Erhöhen der Temperatur des durch die Rohre geleiteten Wasserstoff enthaltenden Gases auf 200 bis 230 °C mit einer Rate von 5 bis 15 K/h sowie Erhöhung der Temperatur im Außenraum durch Zufuhr von Heizdampf und Erhöhung des Drucks, so dass die Siedetemperatur des Wassers im Außenraum der Temperatur im Rohr entspricht,
(e) Ersetzen des Wasser/Dampf-Gemischs im Außenraum durch trocken gesättigten Wasserdampf,
(f) Erhöhen der Temperatur im Rohrinneren auf 250 bis 300 °C mit einer Rate von 2 bis 8 K/h und Halten der Temperatur für einen Zeitraum von 20 bis 30 h,
(g) Absenken der Temperatur im Rohrinneren auf 80 bis 120 °C mit einer Rate von 5 bis 15 K/h und gleichzeitiges Absenken der Temperatur im Außenraum durch Senken des Drucks.

Das Aktivieren des Katalysators gliedert sich dabei in eine Voraktivierung, umfassend die Schritte (a) bis (c) und eine Nachaktivierung, umfassend die Schritte (d) bis (g).

Zur Voraktivierung wird der Katalysator zunächst in Gegenwart einer Stickstoffatmosphäre mit einer Rate von 5 bis 15 K/h, beispielsweise mit einer Rate von 10 K/h, auf eine Temperatur im Bereich von 120 bis 170 °C, beispielsweise auf eine Temperatur von 150 °C, bei einem Druck im Bereich von 120 bis 170 bar, beispielsweise bei einem Druck von 150 bar, aufgeheizt. Gleichzeitig wird die Temperatur des Wassers im Außenraum erhöht. Die Erhöhung der Temperatur des Wassers im Außenraum erfolgt durch Zufuhr von Heizdampf und Erhöhung des Drucks, so dass die Siedetemperatur des Wassers im Außenraum der Temperatur im Inneren des Rohres entspricht. Bei einer Temperatur von 150 °C beträgt der Druck im Außenraum demzufolge 4,76 bar. In einem nächsten Schritt wird die Stickstoffatmosphäre durch Zufuhr von Wasserstoff mit Wasserstoff angereichert, bis eine Konzentration an Wasserstoff von 1 bis 3 Vol.-%, beispielsweise von 2 Vol.-% erreicht ist. Diese Atmosphäre wird für einen Zeitraum von 5 bis 8 h, beispielsweise für einen Zeitraum von 6 h gehalten. Daran anschließend wird die Wasserstoffkonzentration durch Zufuhr von weiterem Wasserstoff auf 4 bis 6 Vol.-%, beispielsweise auf 5 Vol.-%, erhöht. Diese Atmosphäre wird ebenfalls für einen Zeitraum von 5 bis 8 h, beispielsweise über einen Zeitraum von 6 h, gehalten.

In einem weiteren Schritt wird die Wasserstoffkonzentration weiter auf 8 bis 12 Vol.-%, beispielsweise auf 10 Vol.-% erhöht. Diese Konzentration wird gehalten, bis die Temperatur im Reaktorbett im Wesentlichen konstant bleibt. Dies bedeutet, dass keine signifikanten Temperaturspitzen im Reaktorbett auftreten. Unter einer signifikanten Temperaturspitze wird dabei eine lokale höhere Temperatur von mindestens 20 K im Vergleich zur mittleren Temperatur im Reaktorbett verstanden. Sobald die Temperatur im Reaktorbett im Wesentlichen konstant bleibt, wird die Wasserstoffkonzentration weiter auf 45 bis 55 Vol.-%, beispielsweise auf 50 Vol.-%, erhöht.

Unter im Wesentlichen konstanter Temperatur im Sinne der vorliegenden Erfindung wird verstanden, dass die Temperatur um nicht mehr als 5 K von einer mittleren Temperatur abweicht.

An die Voraktivierung schließt sich dann die Nachaktivierung an. Hierzu wird zunächst der Druck im Inneren des mindestens einen Rohres auf 150 bis 250 bar, beispielsweise auf 200 bar, erhöht. Weiterhin erfolgt eine Erhöhung der Temperatur des durch die Rohre geleiteten Wasserstoff enthaltenden Gases auf 200 bis 230 °C, beispielsweise auf 220 °C, mit einer Rate von 5 bis 15 K/h, beispielsweise mit einer Rate von 10 K/h. Gleichzeitig wird die Temperatur im Außenraum weiter durch Zufuhr von Heizdampf und eine Erhöhung des Drucks angehoben, so dass die Siedetemperatur des Wassers im Außenraum der Temperatur im Rohr entspricht. Bei einer Temperatur im Rohr von 220 °C liegt der Druck im Außenraum somit bei 23,2 bar. Sobald dieser Zustand erreicht ist, wird das im Außenraum enthaltene Wasser/Dampf-Gemisch durch trocken gesättigten Wasserdampf ersetzt. Durch den Einsatz des trocken gesättigten Wasserdampfes lässt sich die Temperatur im Außenraum durch Überhitzen des Wasserdampfes weiter erhöhen, ohne dass der Druck weiter signifikant ansteigt. Dies hat den Vorteil, dass der Außenmantel nicht für stärkere Drücke ausgelegt werden muss. Die Wandstärke des Außenmantels kann bei einer geringeren Dicke gehalten werden. Je höher der Druck im Außenraum ansteigen würde, umso dicker müsste ansonsten der Außenmantel sein. Ein dünnerer Außenmantel führt jedoch zu einer starken Materialeinsparung und somit auch einer Gewichts- und Kostenersparnis.

Nach dem Ersetzen des Wasser/Dampf-Gemischs durch trocken gesättigten Wasserdampf wird die Temperatur im Rohrinneren mit einer Rate von 2 bis 8 K/h, beispielsweise mit einer Rate von 5 K/h, auf 250 bis 300 °C, beispielsweise auf 280 °C, erhöht. Diese Temperatur wird für einen Zeitraum von 20 bis 30 h, beispielsweise für 24 h, gehalten. Durch die langsamere Erhöhung der Temperatur im Rohrinneren wird auch der trocken gesättigte Wasserdampf im Außenraum aufgeheizt. Durch konvektive Wärmeübertragung und durch Wärmestrahlung wird auch der Außenmantel erwärmt. Hierdurch wird gewährleistet, dass die Temperatur zwischen Innerem des Rohres und Außenmantel den gewünschten Sollwert nicht übersteigt. Dies ist notwendig, damit der Reaktoraußenmantel aufgrund unterschiedlicher Wärmeausdehnungen der Rohre und des Außenmantels aufgrund unterschiedlicher Temperatur nicht beschädigt wird.

Abschließend wird die Temperatur im Rohrinneren mit einer Rate von 5 bis 15 K/h, beispielsweise mit einer Rate von 10 K/h, abgesenkt. Gleichzeitig wird auch die Temperatur im Außenraum durch Senken des Drucks abgesenkt. Durch Senken des Drucks sinkt die Siedetemperatur des im Außenraum enthaltenen Wasserdampfes. Dieser kondensiert aus. Es stellt sich jeweils die Siedetemperatur des Wassers ein. Durch Senken des Drucks sinkt die Siedetemperatur, so dass eine gezielte Temperaturführung im Außenraum des Reaktors möglich ist. In Abhängigkeit von der im Reaktor durchzuführenden Reaktion wird die Temperatur im Rohrinneren vorzugsweise auf 80 bis 120 °C, beispielsweise auf 100 °C, abgesenkt. Bei einer Temperatur von 100 °C siedet Wasser bei Umgebungsdruck, so dass der Druck im Außenraum des Reaktors ebenfalls auf Umgebungsdruck abgesenkt worden ist. Wenn ein Absenken auf eine niedrigere Temperatur gewünscht ist, wäre es erforderlich, den Außenraum des Reaktors entsprechend zu evakuieren, um eine gleichmäßige Abkühlung zu erzielen.

Wenn im Reaktor eine Hydrierung mit Wasserstoff als Reaktion durchgeführt wird, ist es bevorzugt, nach Abschluss der Aktivierung des Katalysators den noch im Gaskreislauf enthaltenen Stickstoff durch Wasserstoff zu ersetzen.

In einer bevorzugten Ausführungsform wird vor der Aktivierung des Katalysators eine Reinigung des Außenraumes durchgeführt. Die Reinigung dient vorzugsweise gleichzeitig zur Phosphatierung der metallischen Oberflächen des Außenraums. Auf diese Weise werden die Oberflächen zur Erhöhung der Korrosionsbeständigkeit passiviert.

Zur Reinigung des Außenraumes wird dieser zunächst mit entionisiertem Wasser gefüllt. Das Wasser weist dabei vorzugsweise eine Temperatur im Bereich von 20 bis 50°C auf. Das Wasser wird anschließend mit 0,001 bis 0,004 kg, beispielsweise 0,002 kg eines Passivierungsmittels pro Kilogramm Wasser geimpft. Daran anschließend erfolgt eine Erwärmung auf 110 bis 150 °C, beispielsweise auf eine Temperatur von 130 °C, mit einer Rate von 5 bis 15 K/h, beispielsweise mit einer Rate von 10 K/h. Hierzu wird auch der Druck im Außenraum auf den Siededruck des Wassers bei der entsprechenden Temperatur, auf die das Wasser erwärmt wird, erhöht. Bei einer Siedetemperatur von 130 °C wird der Druck somit auf 2,7 bar erhöht. Die Erhöhung der Temperatur erfolgt dabei durch Zuspeisung von Heizdampf.

Die erwärmte, Passivierungsmittel enthaltende wässrige Lösung wird über einen Zeitraum von 20 bis 30 h, beispielsweise über einen Zeitraum von 24 h, umgewälzt. Anschließend wird die Lösung abgekühlt mit einer Rate von 5 bis 15 K/h, beispielsweise mit einer Rate von 10 K/h, auf eine Temperatur im Bereich von 90 bis 100 °C, beispielsweise auf eine Temperatur von 100 °C. Abschließend wird die Lösung durch Zufuhr eines inerten Gases abgelassen.

In einem nächsten Schritt wird der Außenraum mit entionisiertem Wasser mit einer Temperatur im Bereich von 80 bis 100 °C befüllt. Dieses wird mit 0,0005 bis 0,004 kg, beispielsweise mit 0,001 kg eines Passivierungsmittels pro Kilogramm Wasser geimpft. Anschließend erfolgt wiederum eine Erwärmung auf eine Temperatur im Bereich von 110 bis 150 °C, beispielsweise auf 130 °C, mit einer Rate von 5 bis 15 K/h, beispielsweise mit einer Rate von 10 K/h. Diese Lösung wird über einen Zeitraum von 20 bis 30 h, beispielsweise über einen Zeitraum von 24 h, umgewälzt. Anschließend erfolgt wiederum ein Abkühlen mit einer Rate von 5 bis 15 K/h, beispielsweise mit einer Rate von 10 K/h, auf eine Temperatur im Bereich von 90 bis 110 °C, beispielsweise auf eine Temperatur von 100 °C. Abschließend wird auch diese Lösung durch Zufuhr eines inerten Gases abgelassen.

Als Passivierungsmittel eignen sich zum Beispiel ein Alkali- oder Erdalkaliphosphat wie Trinatriumphosphat Na₃PO₄ oder Triammoniumcitrat (NH₄)₃C₆H₅O₇. Besonders bevorzugt wird Na₃PO₄ eingesetzt.

Der vorstehende Schritt wird gegebenenfalls wiederholt, bis die Konzentration an Eisenionen in der Lösung am Ende des Umwälzens einen asymptotischen Verlauf zeigt. Dies bedeutet, dass zunächst mehr Eisenionen in die Lösung gehen und der Anteil an Eisenionen, die in Lösung gehen, immer geringer wird. Durch die Reinigung wird die Oberfläche der Rohre, Rohrplatten und des Außenmantels im Außenraum passiviert, damit diese nicht korrodieren.

Sobald die Konzentration an Eisenionen in der Lösung einen asymptodischen Verlauf zeigt, wird der Außenraum mit entionisiertem Wasser mit einer Temperatur im Bereich von 70 bis 100 °C gespült, indem dieses für einen Zeitraum von 0,5 bis 2 h, insbesondere über einen Zeitraum von 1 h, umgewälzt wird. Dieser Vorgang wird gegebenenfalls durch Wechsel des entionisierten Wassers wiederholt, bis eine elektrische Leitfähigkeit des Wassers am Ende des Spülvorgangs von maximal 20 µS/cm gemessen wird. Die kleine Leitfähigkeit zeigt an, dass keine Fremdionen mehr im Wasser enthalten sind.

Weiterhin betrifft die Erfindung auch ein Verfahren zur Durchführung einer exothermen Reaktion in dem erfindungsgemäßen Reaktor. Hierbei wird dem mindestens einen Rohr mindestens ein Edukt als Reaktionsmedium zugegeben, das im Rohr zumindest teilweise zu einem Produkt reagiert. Dem Außenraum wird ein Temperiermittel zugegeben und das Temperiermittel wird bei einer im Wesentlichen konstanten Temperatur durch Wärmeaufnahme verdampft, so dass die Reaktion unter im Wesentlichen isothermen Bedingungen durchgeführt wird.

Durch das Verdampfen bildet sich im Außenraum des Reaktors ein Flüssig/DampfGemisch. Bei einem konstanten Druck erfolgt die Verdampfung, solange noch Flüssigkeit enthalten ist, bei einer konstanten Temperatur. Auf diese Weise lässt sich im Außenraum des Reaktors eine konstante Temperatur einstellen. Da von den Rohren Wärme an das Temperiermittel im Außenraum abgegeben wird, verdampft das Temperiermittel im Außenraum. Die Rohre können auf eine im Wesentlichen gleiche Temperatur temperiert werden. Innerhalb der Rohre tritt ein Temperaturverlauf von der Rohrachse zur Rohrwand auf. Aufgrund der Wärmeabgabe an der Rohrwand nimmt die Temperatur dabei von der Rohrmitte zur Rohrwand hin ab. Die bei der exothermen Reaktion entstehende Wärme wird vom Temperiermittel aufgenommen.

Im Wesentlichen isotherme Bedingungen im Sinne der vorliegenden Erfindung bedeutet, dass sich die Temperatur im Inneren des Rohres um maximal 6 K, vorzugsweise um maximal 3 K, erhöht.

Vorteil der im Wesentlichen isothermen Reaktionsbedingungen ist, dass der in dem mindestens einen Rohr enthaltene Katalysator über die gesamte durchströmte Länge bei nahezu gleichen Reaktionsbedingungen zum Einsatz kommt. Bei gleicher vorgegebener Reaktoraustrittstemperatur führt dies zu einem höheren Umsatz des Eduktes zum Produkt als beispielsweise bei konventionell ausgebildeten adiabaten Schachtreaktoren. Durch die gleichmäßige Ausschöpfung der Katalysatoraktivität ist zudem eine höhere Einsatzdauer bis zu einem notwendigen Wechsel des Katalysators verbunden.

Ein weiterer Vorteil des im Wesentlichen gleichbleibenden, nahezu isothermen Temperaturniveaus liegt in der gleichbleibenden Zusammensetzung des Austrages aus dem Reaktor.

Aufgrund der im Wesentlichen gleichbleibenden Zusammensetzung des Austrages aus dem Reaktor lassen sich sehr feine Regeleinstellungen an nachfolgenden Aufbereitungsvorrichtungen, beispielsweise Aufbereitungskolonnen treffen. Hierzu lässt sich zum Beispiel der Energieeinsatz in zur Aufbereitung eingesetzten Destillationsanlagen sowie der Produktverlust bei Ausschleusen unerwünschter Nebenkomponenten aus einzelnen Verfahrensstufen minimieren.

Die Zufuhr der Edukte in den Reaktor erfolgt vorzugsweise von unten. Durch die Einbauten zur Vergleichmäßigung der Verteilung der Edukte auf die Rohre wird eine gleichmäßige Zufuhr in die einzelnen Rohre des Reaktors gewährleistet. Die Zufuhr der Edukte von unten erfolgt insbesondere dann, wenn mindestens eines der Edukte gasförmig vorliegt, da die gasförmigen Edukte in der Flüssigkeit im Allgemeinen aufsteigen. Auch wenn das entstehende Produkt gasförmig ist, ist es bevorzugt, die Edukte von unten dem Reaktor zuzuführen.

Das Temperiermedium zum Einstellen der Temperatur in den Rohren wird ebenfalls vorzugsweise von unten dem Außenraum des Reaktors zugeführt. Auf diese Weise werden das Temperiermittel und das Reaktionsmedium im Gleichstrom durch den Reaktor geführt. Vorteil der Zufuhr des Temperiermittels von unten in den Außenraum des Reaktors ist, dass der bei der Wärmeaufnahme und damit verbundenen Verdampfung des Temperiermittels entstehende Dampf im Reaktor aufsteigt. Auf diese Weise ist es möglich, dass der Wasserdampf schneller den Außenraum des Reaktors durchströmt als das flüssige Wasser. Der Wasserdampf kann am oberen Ende des Außenraumes des Reaktors ausgetragen werden. Bei einer Durchströmung des Temperiermittels von oben nach unten wäre es notwendig, dass die Wasserströmung die entstehenden Dampfblasen mitreißt. Dies würde ein schnelles Durchströmen des Reaktors erforderlich machen. Insbesondere bei einem Ausfall der Energieversorgung könnte dies dazu führen, dass die Fallgeschwindigkeit des Wassers nicht ausreicht, die Dampfblasen mitzureißen. Dies würde dazu führen, dass möglicherweise innerhalb des Außenraums des Reaktors Dampfblasen entstehen, in denen keine Wärme aus den Rohren abgeführt werden kann. Bei einer stark exothermen Reaktion könnte dies zu einem starken Aufheizen im Rohr und damit gegebenenfalls sogar zu einem Durchbrennen des Reaktors führen.

Erfindungsgemäß wird bei einem Ausfall der Energieversorgung das Temperiermittel aus dem Vorratsbehälter aufgrund des hydraulischen Drucks durch den Außenraum des Reaktors geleitet. Da der Vorratsbehälter erfindungsgemäß so angeordnet ist, dass der Flüssigkeitsspiegel des Temperiermittels im Vorratsbehälter mindestens im Wesentlichen auf gleicher Höhe ist wie der Flüssigkeitsspiegel im Außenraum des Reaktors, strömt Temperiermittel von unten in den Reaktor, verdampft entlang der Rohre aufgrund der aufgenommenen Wärme und der Wasserdampf im Reaktor steigt auf. Der entstehende Wasserdampf wird aus dem Reaktor entnommen, um den Druck im Wesentlichen konstant zu halten oder, um die Temperatur weiter abzusenken, auch weiter zu senken. Durch das verdampfende Wasser sinkt der Flüssigkeitsspiegel im Reaktor, so dass aus dem Vorratsbehälter neues Temperiermittel nachgeführt wird. Um sicherzustellen, dass auch bei vollständig geflutetem Außenraum des Reaktors ausreichend Temperiermittel nachströmt, ist es auch möglich, den Vorratsbehälter so anzuordnen, dass der Flüssigkeitsspiegel im Vorratsbehälter immer oberhalb des Flüssigkeitsspiegels im Reaktor liegt.

Bevorzugt wird bei einem Ausfall der Energieversorgung der Druck im Außenraum abgesenkt. Durch den abgesenkten Druck im Außenraum sinkt auch die Siedetemperatur des Temperiermittels. Auf diese Weise kann die Temperatur in den Rohren abgesenkt werden. Im idealen Fall ist so gegebenenfalls sogar eine Absenkung auf eine Temperatur möglich, bei der die Reaktion beendet wird.

Der erfindungsgemäß ausgebildete Reaktor sowie das erfindungsgemäße Verfahren eignen sich insbesondere zur Herstellung von Aminodiglykol und Morpholin. In diesem Fall werden dem Reaktor als Edukte Diethylenglykol und Ammoniak zugegeben. Diese werden zu Aminodiglykol und Morpholin umgesetzt.

Die Herstellung von Aminodiglykol und Morpholin durch Umsetzung von Diethylenglykol und Ammoniak in Gegenwart von Wasserstoff ist zum Beispiel in WO-A 2007/036496 beschrieben.

Die Reaktion wird im Allgemeinen in Gegenwart eines durch Wasserstoff aktivierten heterogenen Katalysators durchgeführt. Eine geeignete katalytisch aktive Masse enthält beispielsweise vor der Behandlung mit Wasserstoff sauerstoffhaltige Verbindungen des Aluminiums und/oder des Zirkoniums, Kupfers, Nickels und Cobalts.

An den für die Aminodiglykol- und Morpholin-Synthese bekannten Katalysatoren können neben der Bildung des Aminodiglykols und Morpholins auch exotherme Fragmentierungsreaktionen auftreten. Hierbei handelt es sich im Allgemeinen um die Zersetzung von Diethylenglykol. Bei der Zersetzung von Diethylenglykol entsteht Kohlenmonoxid mit anschließender Bildung von Methan und Wasser bei Anwesenheit von Wasserstoff beziehungsweise mit anschließender Bildung von Kohlendioxid und Kohlenstoff bei Abwesenheit von Wasserstoff. Die Reaktionen sind beide exotherm. Zudem ist die Zersetzung von Diethylenglykol in Abwesenheit von Wasserstoff im Unterschied zur Zersetzungsreaktion des Diethylenglykols in Anwesenheit von Wasserstoff druckbildend. Im Allgemeinen können beide Reaktionen gleichzeitig ablaufen. Die Anwesenheit von Wasserstoff alleine ist noch nicht ausreichend, um die Entwicklung der druckerhöhenden Reaktion, bei der das Diethylenglykol zersetzt wird und dabei entstehendes Kohlenmonoxid zu Kohlendioxid und Kohlenstoff weiterreagiert, auszuschließen.

Die beiden Zersetzungsreaktionen des Diethylenglykols haben im stationären Betrieb der Aminodiglykol- und Morpholin-Synthese keine die Anlagensicherheit betreffenden Nachteile. Jedoch können diese Reaktionen bei Ausfall des für die Aminierung eingesetzten Ammoniaks dominierend werden. Der Ammoniak kann zum Beispiel bei Ausfall der Energieversorgung ausfallen. In konventionellen, im Wesentlichen adiabaten Schachtreaktoren, wie sie derzeit bei der Synthese von Diethylenglykol und Ammoniak zu Aminodiglykol und Morpholin eingesetzt werden, können bei Ausfall des für die Aminierung eingesetzten Ammoniaks selbst beschleunigte, exotherme und druckerhöhende Reaktionen entstehen. Diese führen zu gefährlichen und unkontrollierbaren Zuständen. Die Einhaltung von Betriebsparametern, bei denen die Zersetzungsreaktionen des Diethylenglykols in eine unkritische Größenordnung überführt werden, führt im Allgemeinen zu einem verminderten Durchsatz an Diethylenglykol bzw. zu einer geringeren Produktionsmenge an Morpholin und Aminodiglykol. Zudem lässt sich die Einhaltung der entsprechenden Parameter in Produktionsanlagen nicht zuverlässig umsetzen, da sich die Eigenschaften der heterogenen Katalysatoren hinsichtlich der Zersetzung von Diethylenglykol innerhalb des Einsatzzeitraumes verändern können. Vorteil des Einsatzes des erfindungsgemäßen Reaktors bei der Synthese von Aminodiglykol und Morpholin ist, dass dieser eigensicher ist. Auch sind im produktionstechnisch relevanten Betriebsbereich keine Restriktionen und keine Hilfsmittel zur Sicherung der Ammoniakversorgung erforderlich. Zudem können aufgrund der gleichmäßigen Nutzung der Katalysatoraktivität aufgrund des im Wesentlichen isothermen Betriebs des Reaktors die Betriebskosten gesenkt werden.

Zur Synthese von Aminodiglykol und Morpholin durch Reaktion von Diethylenglykol mit Ammoniak in Gegenwart von Wasserstoff liegt die Temperatur im Inneren des mindestens einen Rohres vorzugsweise bei 150 bis 250°C, insbesondere bei 160 bis 220 °C. Als Temperiermittel wird vorzugsweise Wasser eingesetzt. Der Druck im Außenraum des Reaktors wird so gewählt, dass im Außenraum des Reaktors der Siedezustand des Wassers erreicht ist. Das heißt, dass der Druck im Außenraum des Reaktors so gewählt wird, dass das Wasser bei der Reaktionstemperatur siedet. Im Vorratsbehälter, in dem das als Temperiermittel dienende Wasser vorgehalten wird, liegt der Siededruck ebenso wie im Außenraum des Reaktors vorzugsweise im Bereich von 4,76 bis 86 bar (abs), insbesondere im Bereich von 6,2 bis 23,2 bar (abs).

Bei einem gegebenenfalls auftretenden Ausfall der Energie, bei dem ein unkontrolliertes Durchgehen der Reaktion droht, strömt das im Vorratsbehälter enthaltene Temperiermittel, im Allgemeinen das Wasser, in den Reaktor. Im Reaktor verdampft das Wasser und nimmt so Wärme aus den einzelnen Rohren, in denen die Reaktion durchgeführt wird, auf. Bei einem offenen Kreislauf wird der entstehende Wasserdampf an die Umgebung abgegeben. Hierzu wird ein Ventil oder eine beliebige andere Vorrichtung zur Einstellung des Drucks so geöffnet, dass der Druck im Außenbereich des Reaktors abgesenkt wird. Durch den abgesenkten Druck sinkt auch die Siedetemperatur des Temperiermittels, wodurch die Rohre von außen stärker gekühlt werden. Dies führt ebenfalls zu einer Kühlung im Inneren der Rohre. Als Vorrichtung zur Einstellung des Drucks wird vorzugsweise eine solche verwendet, die bei einem Ausfall der Energie automatisch öffnet, damit der Druck gesenkt wird. Vorzugsweise ist die Vorrichtung derart ausgelegt, dass bei einem Ausfall der elektrischen Energieversorgung der Reaktor innerhalb eines Zeitraumes von 40 bis 75 min mit einem Gradienten von 80 bis 120 K/h, beispielsweise mit einem Gradienten von 100 K/h, auf Umgebungsdruck entspannt wird. Im gleichen Zeitraum wird auch das in den Rohren enthaltene Reaktionsmedium auf weniger als 150 °C abgekühlt. Hierdurch kann die Morpholin- und Aminodiglykol-Synthese in einen langzeitig sicheren Zustand überführt werden.

Das Durchströmen des Reaktors bei Ausfall der Energieversorgung, d. h. insbesondere dann, wenn auch die Pumpe des Temperierkreislaufes ausfällt, wird dadurch ermöglicht, dass als Pumpe eine Freilaufpumpe eingesetzt wird. Die Freilaufpumpe erlaubt ein Durchströmen auch dann, wenn diese nicht betrieben wird. Das Durchströmen erfolgt dann aufgrund des Drucks der Flüssigkeit.

Beim Einsatz des erfindungsgemäßen Reaktors zur Herstellung von Aminodiglykol und Morpholin aus Diethylenglykol und Ammoniak werden das Diethylenglykol und der Ammoniak als Edukte vorzugsweise von unten in die einzelnen, den Katalysator enthaltenden Rohre eingebracht. Die Menge an Edukten wird vorzugsweise so gewählt, dass der Reaktor mit einer Katalysatorbelastung von 0,5 bis 4 kg Edukt pro Liter Reaktionsvolumen pro Stunde, bevorzugt mit einer Katalysatorbelastung von 1,2 bis 3 kg Edukt pro Liter Reaktionsvolumen pro Stunde betrieben werden kann.

Neben der Herstellung von Aminodiglykol und Morpholin durch Reaktion von Diethylenglykol mit Ammoniak in Gegenwart von Wasserstoff eignet sich der erfindungsgemäß ausgebildete Reaktor auch für die Synthese beliebiger anderer chemischer Verbindungen, bei denen beim Ausfall von Aggregaten selbstbeschleunigende, exotherme und druckerhöhende Reaktionen auftreten können. Weiterhin eignet sich der erfindungsgemäß ausgebildete Reaktor auch zum Einsatz bei Reaktionen, bei denen eine gleichmäßige Zusammensetzung des Reaktoraustrages zu Vorteilen bei der Aufbereitung, beispielsweise der destillativen Aufbereitung, der Wertprodukte führt.

Weitere chemische Reaktionen, bei denen der erfindungsgemäß ausgebildete Reaktor vorteilhafterweise eingesetzt wird, sind zum Beispiel die Synthese von Polyetheraminen, Ethylaminen, Propylaminen und Butylaminen durch Umsetzung des jeweiligen Alkohols mit Ammoniak in Gegenwart von Wasserstoff sowie die Synthese von Cyclododekanon (Oxidation von Cyclododecatrien mit N₂O).

Wenn der erfindungsgemäß ausgebildete Reaktor zur Synthese von Propylaminen oder Butylaminen eingesetzt wird, liegt die Temperatur, bei der die Reaktion durchgeführt wird, vorzugsweise im Bereich zwischen 200 und 270°C, insbesondere im Bereich zwischen 220 und 250°C. Der Druck, bei der die Reaktion durchgeführt wird, liegt vorzugsweise im Bereich zwischen 10 und 250 bar, insbesondere im Bereich zwischen 50 und 150 bar.

Eine Synthese von Polyetheraminen erfolgt üblicherweise durch Aminierung von Polyetheralkoholen. Die Aminierung von Polyetheralkoholen wird vorzugsweise bei einer Temperatur im Bereich von 170 bis 240°C, insbesondere bei einer Temperatur im Bereich von 180 bis 230°C und einem Reaktionsdruck von vorzugsweise 80 bis 220 bar, insbesondere von 120 bis 200 bar durchgeführt.

Monoalkohole, die durch Aminierung zu Polyetheraminen umgewandelt werden können, sind vorzugsweise solche der allgemeinen Struktur (I):

R¹-X-OH (I)

wobei X für Einheiten 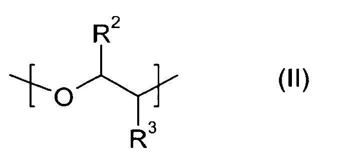 und/oder 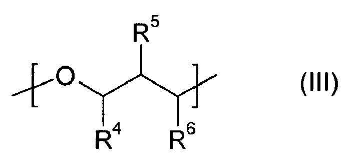 steht. Die beiden Einheiten II und III sind jeweils in einer Anzahl von 0 bis 50 im Polyethermonoalkohol vorhanden und sind in beliebiger Reihenfolge angeordnet.

R¹ ist C₁C₃₀-Alkyl, das linear oder verzweigt sein kann. Die Reste R², R³, R⁴, R⁵ und R⁶ sind gleich oder verschieden jeweils unabhängig voneinander H oder lineares C₁-C₁₀-Alkyl.

Die im Polyethermonoalkohol enthaltenen Einheiten (II) und/oder (III) können jeweils gleich oder unterschiedlich substituiert sein.

Bevorzugt werden Polyethermonoalkohole eingesetzt, in denen nur Einheiten (II) vorkommen, wobei R² bevorzugt Wasserstoff und R³ Wasserstoff oder lineares C₁-C₁₀-Alkyl ist.

Wenn zur Herstellung der Polyetheramine Polyetherdiole eingesetzt werden, so werden vorzugsweise solche eingesetzt, die Propylenoxid- und/oder Ethylenoxid- und/oder Butylenoxid- und/oder Pentylenoxid basiert sind. Es ist jedoch auch möglich, dass bei den zur Herstellung der Polyetheramine eingesetzten Polyetherdiolen die Ethersauerstoffe durch eine Alkylengruppe aus drei oder mehr C-Atomen verbrückt sind. Geeignete Diole, die zur Synthese von Polyetheraminen eingesetzt werden können, sind zum Beispiel solche der allgemeinen Formeln IV, V und VI.

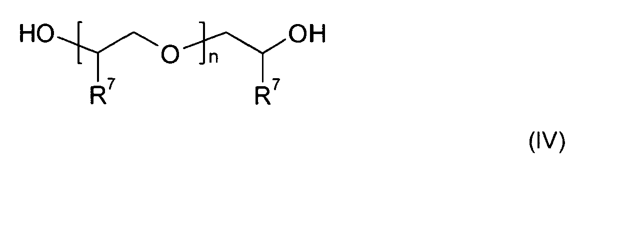

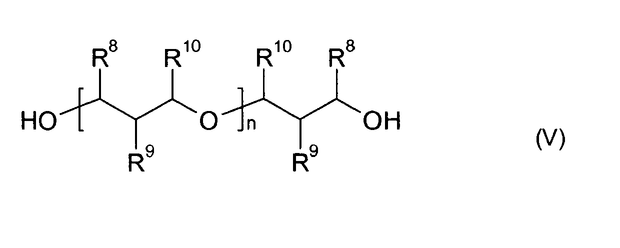

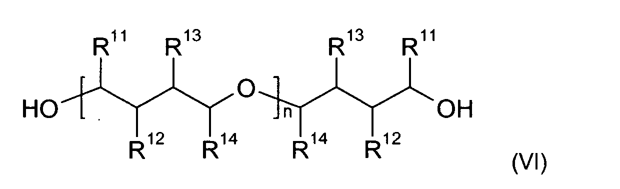

Darin bedeutet n jeweils eine ganze Zahl zwischen 1 und 50, R⁷ Wasserstoff oder lineares C₁-C₁₀-Alkyl und R⁸ bis R¹⁴ gleich oder verschieden unabhängig voneinander Wasserstoff oder Methyl. Es ist zu beachten, dass beispielsweise in der allgemeinen Formel IV Einheiten 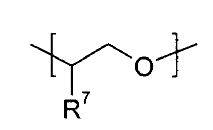 mit gleichen oder unterschiedlichen Resten R⁷ auftreten, wobei unterschiedlich substituierte Einheiten in beliebiger Abfolge und Wiederholung im jeweiligen Polyetherdiol vorhanden sind. Dasselbe gilt analog für die Polyetherdiole mit den Einheiten 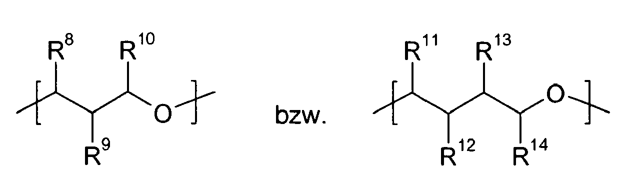 für die Reste R⁸ bis R¹⁴.

Weiterhin können zur Synthese von Polyetheraminen auch Polyethertriole eingesetzt werden. Die Polyethertriole sind vorzugsweise solche der allgemeinen Formel VII.

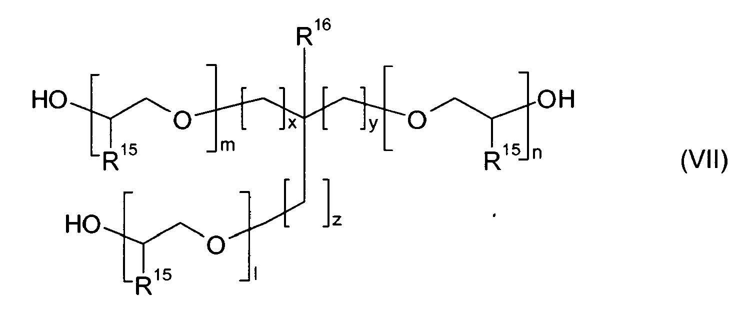

Darin bedeuten m, n und I jeweils gleich oder verschieden unabhängig eine ganze Zahl zwischen 1 und 50, x, y und z jeweils gleich oder verschieden unabhängig voneinander 0 oder 1, wobei im Allgemeinen höchstens einer der drei Koeffizienten x, y oder z 0 ist. R¹⁵ ist Wasserstoff oder lineares C₁-C₁₀-Alkyl und R¹⁶ ist Wasserstoff oder lineares oder verzweigtes C₁-C₁₀-Alkyl. Treten innerhalb der Formel VII Wiederholungseinheiten mit unterschiedlichen Resten R¹⁵ auf, ist die Abfolge und Wiederholung der Wiederholungseinheiten beliebig.

Als Temperiermittel wird vorzugsweise Wasser eingesetzt. Vorteil von Wasser ist, dass dieses nicht für die Umwelt schädlich ist, wenn es beispielsweise beim Ausfall der Energieversorgung als Wasserdampf an die Umgebung abgegeben wird. Ein weiterer Vorteil der Verwendung von Wasser ist zum Beispiel, dass der bei der Temperierung des Reaktors entstehende Wasserdampf als Heizdampf für andere Prozesse genutzt werden kann.

Alternativ ist es jedoch auch möglich, als Temperiermittel jedes beliebige andere, dem Fachmann bekannte Temperiermittel einzusetzen. So ist es zum Beispiel dann möglich, wenn z. B. im Zuge der Inbetriebnahme des Reaktors ein Aufheizen des Reaktionsmediums erfolgen soll, ein Thermalöl einzusetzen. Alternativ kann zum Beispiel auch ein Kältemittel, beispielsweise ein Gemisch aus Wasser und Ethylenglykol eingesetzt werden, wenn der Reaktor auf niedrige Temperaturen gekühlt werden soll. Im Fall des Einsatzes von von Wasser abweichenden Temperiermitteln ist es bevorzugt, wenn der Temperiermittelkreislauf geschlossen betrieben wird, damit kein Temperiermittel an die Umgebung austreten kann. Im Falle der ausfallenden Energieversorgung ist es in diesem Fall bevorzugt, wenn eine Vorrichtung zur Druckabsenkung vorgesehen ist, die in einer Leitung aufgenommen ist, die in einen Auffangbehälter mündet. Das Temperiermittel wird dann im Auffangbehälter aufgefangen und gelangt so nicht in die Umgebung.

Eine Ausführungsform der Erfindung ist in den Figuren dargestellt und wird in der nachfolgenden Beschreibung näher erläutert.

Es zeigen:
- Figur 1: ein Flussdiagramm eines erfindungsgemäß ausgebildeten Reaktors,
- Figur 2: einen Ausschnitt einer Rohrplatte mit darin befestigten Rohren.

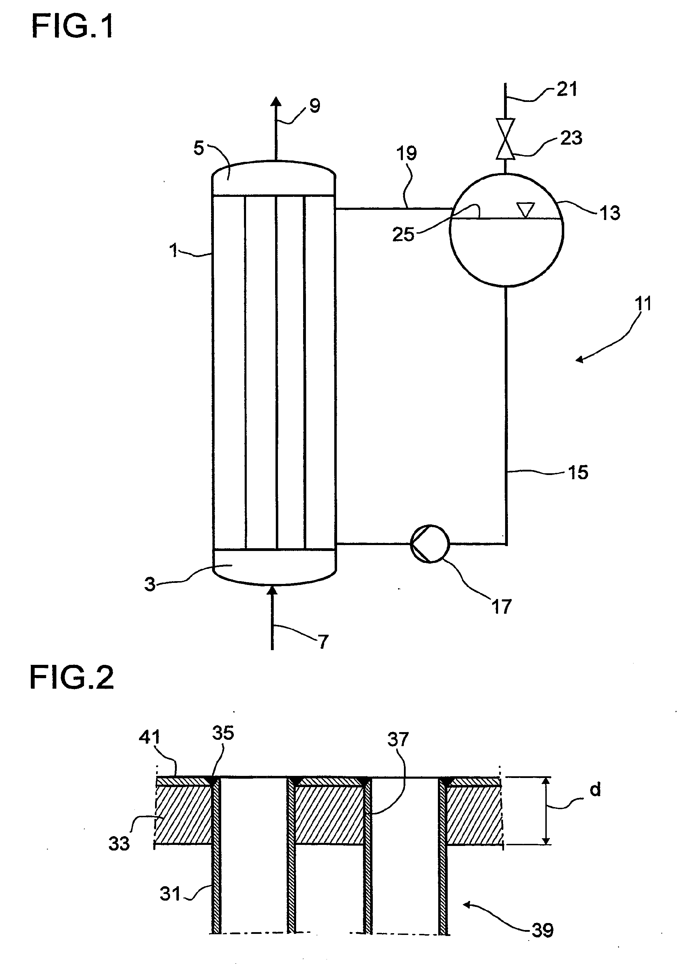

In Figur 1 ist ein Flussdiagramm eines erfindungsgemäß ausgebildeten Reaktors mit Temperierkreislauf dargestellt.

Ein Reaktor 1 ist vorzugsweise als Rohrbündelreaktor ausgebildet. Alternativ ist es jedoch auch möglich, dass zum Beispiel ein einzelnes Rohr mit einem Doppelmantel eingesetzt wird. Die Rohre des Reaktors 1 sind mit ihren Enden jeweils in einer Rohrplatte befestigt. Dies ermöglicht es, dass einerseits die Rohre durchströmt werden, andererseits ist es auch möglich, die Rohre mit einem zweiten Medium zu umströmen. Um die Rohre umströmen zu können, ist der Reaktor 1 mit einem Außenmantel, der die Rohre umschließt, umgeben.

Die Rohre münden einerseits in einen Verteilerraum 3 und andererseits in einen Sammelraum 5. Im Verteilerraum 3 wird Medium, welches durch die Rohre geführt werden soll, auf die einzelnen Rohre verteilt. Um eine gleichmäßige Verteilung zu erzielen, ist es bevorzugt, wenn im Verteilerraum 3 Einbauten vorgesehen sind, die eine gleichmäßige Verteilung auf die Rohre gewährleisten. Als Verteiler eignen sich zum Beispiel Verteilerplatten, die an einer aktiven Fläche Durchgangsöffnungen und einen sich nach unten erstreckenden Rand aufweisen. Die Verteilerplatte erstreckt sich dabei nicht über den gesamten Querschnitt des Verteilerraumes 3. Zusätzlich zur Verteilerplatte kann ein Vorverteiler vorgesehen sein.

Dieser ist ebenso wie die Verteilerplatte aufgebaut und weist an einer aktiven Fläche Durchgangsöffnungen und einen sich nach unten erstreckenden Rand auf. Üblicherweise hat der Vorverteiler einen kleineren Durchmesser als die Verteilerplatte. Neben den Verteilerplatten kann aber auch jede andere, dem Fachmann bekannte Verteilvorrichtung eingesetzt werden.

Durch die Befestigung der Rohre in der Rohrplatte wird vermieden, dass Medium aus dem Verteilerraum an den Rohren vorbeiströmt. Hierzu sind die Rohre gas- und flüssigkeitsdicht in der Rohrplatte eingebracht. Dies erfolgt vorzugsweise durch Einschweißen der Rohre in der Rohrplatte.

Das über den Verteilerraum 3 zugegebene Medium durchströmt anschließend die Rohre und verlässt diese im Sammelraum 5. Der Sammelraum 5 ist an der Seite, an der die Rohre münden, ebenfalls durch eine Rohrplatte begrenzt. Auch auf dieser Seite sind die Rohre gas- und flüssigkeitsdicht in der Rohrplatte befestigt. Dies erfolgt auch auf der Seite des Sammelraums 5 vorzugsweise durch Einschweißen der Rohre in der Rohrplatte.

Um das Medium, das die Rohre durchströmt, zuzuführen, mündet mindestens ein Zulauf 7 in den Verteilerraum 3. Wenn eine Synthese im Reaktor 1 durchgeführt wird, werden die für die Synthese notwendigen Edukte über den Zulauf 7 zugeführt. Alternativ ist es auch möglich, für jedes Edukt, das dem Reaktor 1 zugeführt wird, einen eigenen Zulauf 7 vorzusehen. In diesem Fall erfolgt das Vermischen im Verteilerraum 3. Bevorzugt ist es jedoch, die Edukte zunächst zu vermischen und gemeinsam über einen Zulauf 7 dem Verteilerraum 3 zuzuführen. Üblicherweise sind die dem Reaktor 1 zugeführten Edukte flüssig oder gasförmig. Auch Mischungen aus Flüssigkeiten und Gasen sind möglich. Weiterhin ist es auch möglich, dass zum Beispiel in einer Flüssigkeit feinverteilter Feststoff dem Reaktor 1 über den Zulauf 7 zugeführt wird. Bei dem in der Flüssigkeit dispergierten Feststoff kann es sich zum Beispiel um ein Edukt oder auch um einen heterogenen Katalysator handeln. Wenn ein heterogener Katalysator eingesetzt wird, so ist dieser jedoch vorzugsweise fest in den Rohren aufgenommen. Der Katalysator kann dabei zum Beispiel pulverförmig, als Granulat, als Füllkörperschüttung oder als strukturierte Packung vorliegen. In Abhängigkeit von der durchzuführenden Reaktion wird ein geeigneter Katalysator eingesetzt. Hierbei kann der Katalysator entweder nur aus dem katalytisch aktiven Material bestehen, oder es wird ein Katalysator eingesetzt, der geträgert ist. Hierbei ist das katalytisch aktive Material mit einer Trägersubstanz verbunden.

Insbesondere eignet sich der erfindungsgemäß ausgebildete Reaktor 1 zur Durchführung von Reaktionen, die in Gegenwart eines Katalysators durchgeführt werden, der vor Beginn der Reaktion aktiviert werden muss. Die Aktivierung kann dabei zum Beispiel durch Reaktion mit Wasserstoff erfolgen. Hierzu wird der Katalysator, der sich in den Rohren befindet, zunächst aufgeheizt, und es wird eine Wasserstoffatmosphäre durch den Katalysator geleitet. Üblicherweise wird hierzu mit Wasserstoff angereicherter Stickstoff eingesetzt. Dieser wird über den Zulauf 7 zugeführt, durchströmt die mit dem Katalysator befüllten Rohre, sammelt sich im Sammelraum 5 und wird über einen Ablauf 9, der in den Sammelraum 5 mündet, aus dem Reaktor 1 ausgetragen. Ein Temperaturausgleich zwischen den Rohren und dem Außenmantel erfolgt über einen Temperierkreislauf 11. Durch den Temperierkreislauf 11 wird dem Reaktor ein Temperiermedium zugeführt, welches die Rohre umströmt. Das Temperiermedium nimmt zum Beispiel Wärme von den Rohren auf und gibt diese teilweise an den Außenmantel ab. Üblicherweise wird die für die Aktivierung erforderliche Wärme zugeführt, indem der Wasserstoff enthaltende Gasstrom, der über den Zulauf 7 zugeführt wird, vor Eintritt in den Reaktor 1 aufgeheizt wird. Die Temperatur im Reaktor 1 wird durch den Temperierkreislauf 11 auf Hydriertemperatur gehalten. Wenn bei der Aktivierung des Katalysators Wärme frei wird, so kann diese zum Beispiel vom Temperiermittel, das im Temperierkreislauf 11 enthalten ist, aufgenommen werden. Ein weiterer Vorteil des Temperierkreislaufes 11 ist, dass durch das Temperiermittel Wärme von den Rohren des Rohrbündelreaktors 1 an den Außenmantel abgegeben wird und dieser dadurch erwärmt wird. Hierdurch werden stark unterschiedliche Ausdehnungen der Rohre und des Außenmantels aufgrund unterschiedlicher Temperaturen vermieden. Dies ermöglicht es, einen Außenmantel ohne zusätzlichen Kompensator einzusetzen.

Nach Beendigung des Aktivierungsvorganges werden über den Zulauf 7 die für die im Reaktor 1 durchzuführende Reaktion notwendigen Edukte zugeführt. Im Reaktor erfolgt die Umsetzung zum gewünschten Produkt. Das Produkt, nicht umgesetztes Edukt und gegebenenfalls entstehende Nebenprodukte werden im Sammelraum 5 gesammelt und über den Ablauf 9 aus dem Reaktor ausgetragen. Der Ablauf 9 ist zum Beispiel mit einer Aufbereitungseinrichtung verbunden. Als Aufbereitungseinrichtung eignet sich zum Beispiel eine Destillieranlage, in der die im Ablauf enthaltenen Stoffe voneinander getrennt werden, um ein reines Produkt zu gewinnen. Neben einer Destillieranlage kann aber auch jede beliebige andere Aufbereitungseinrichtung eingesetzt werden. Sofern im Reaktor eine vollständige Umsetzung der Edukte erfolgt, ist es auch möglich, das im Ablauf 9 enthaltene Produkt direkt zu sammeln oder gegebenenfalls als Ausgangssubstanz für eine weitere Reaktion einzusetzen.

Um die Reaktion im Reaktor 1 kontrolliert durchführen zu können, insbesondere bei einer exothermen Reaktion, ist es notwendig, die entstehende Wärme abzuführen. Dies erfolgt über den Temperierkreislauf 11. Der Temperierkreislauf 11 umfasst einen Vorratsbehälter 13, in dem Temperiermittel vorgelegt wird. Das Temperiermittel ist im Allgemeinen flüssig. Über eine Zuleitung 15 wird das Temperiermittel dem Reaktor 1 zugeführt. Der Zulauf für das Temperiermittel ist dabei so ausgestaltet, dass das Temperiermittel die im Reaktor enthaltenen Rohre von außen umströmt. Für den Transport des Temperiermittels ist in der Zuleitung 15 eine Pumpe 17 aufgenommen. Mit Hilfe der Pumpe 17 wird das Temperiermittel in den Reaktor transportiert. Die Reaktion im Reaktor 1 wird vorzugsweise unter isothermen Bedingungen durchgeführt. Um dies realisieren zu können, verdampft das Temperiermittel zumindest teilweise während des Durchströmens des Außenraumes des Reaktors 1. Das entstehende Dampf-Flüssigkeits-Gemisch wird über einen Ablauf 19 wieder dem Vorratsbehälter 13 zugeführt. Alternativ ist es auch möglich, insbesondere wenn als Temperiermittel Wasser eingesetzt wird, das aufgeheizte Temperiermittel direkt aus dem Temperierkreislauf abzugeben. In diesem Fall handelt es sich um einen offenen Kreislauf. Wenn das Temperiermittel über den Ablauf 19 nicht dem Vorratsbehälter 13 zugeführt wird, sondern aus dem Temperierkreislauf ausgetragen wird, ist es notwendig, eine entsprechende Menge an neuem Temperiermittel dem Vorratsbehälter 13 zuzuführen. Alternativ ist es jedoch auch möglich, den Vorratsbehälter 13 zur Trennung von Dampf und Flüssigkeit zu nutzen und den Dampf über eine Dampfleitung 21 aus dem Vorratsbehälter 13 zu entfernen. Der Dampf kann dabei zum Beispiel als Heizdampf für weitere Prozesse genutzt werden. Auch in diesem Fall ist es notwendig, dem Vorratsbehälter 13 Wasser in der Menge zuzuführen, in der Dampf entnommen wird. Wenn als Temperiermittel kein Wasser, sondern ein beliebiges anderes Temperiermittel eingesetzt wird, zum Beispiel ein Thermalöl oder ein Kältemittel, ist es bevorzugt, wenn im Ablauf 19 ein Wärmetauscher enthalten ist, in dem das Temperiermittel vor Zulauf in den Vorratsbehälter 13 abgekühlt wird. Alternativ ist es auch möglich, zum Beispiel eine Kühlschlange im Vorratsbehälter 13 vorzusehen, so dass der Vorratsbehälter 13 gleichzeitig als Wärmetauscher fungiert. Über den Wärmetauscher wird die Wärme, die während des Durchlaufes durch den Reaktor 1 aufgenommen wurde, wieder abgegeben.

Um zu gewährleisten, dass die im Reaktor 1 durchgeführte Reaktion bei Ausfall der Energieversorgung nicht durchgeht, ist es bevorzugt, als Pumpe 17 eine Freilaufpumpe einzusetzen. Diese ermöglicht ein Durchströmen bei Stillstand der Pumpe. Insbesondere bei einem Stromausfall ist dies erforderlich, da bei einem solchen die Pumpe 17 nicht betätigt werden kann. Aufgrund des hydraulischen Druckes strömt das flüssige Temperiermittel aus dem Vorratsbehälter 13 über die Zuleitung 15 in den Außenraum des Reaktors 1. Im Reaktor 1 verdampft das Temperiermittel und kühlt so die Rohre. Um die gewünschte Temperatur, bei der das Temperiermittel siedet, zu erzielen, ist es möglich, zum Beispiel über ein Ventil 23, das in der Dampfleitung 21 enthalten ist, den Druck im Temperierkreislauf 11 einzustellen. Wenn zum Beispiel als Temperiermittel Wasser eingesetzt wird und die Dampfleitung 21 in die Umgebung mündet, kann durch das Ventil 23 im Außenraum des Reaktors 1 Umgebungsdruck eingestellt werden. In diesem Fall siedet das als Temperiermittel eingesetzte Wasser bei einer Temperatur von 100°. Dies ermöglicht ein Herunterkühlen der Reaktion in den Rohren auf diese Temperatur. Falls ein Abkühlen auf eine Temperatur unterhalb von 100 °C gewünscht ist, ist es erforderlich, als Temperiermittel ein Temperiermittel einzusetzen, das eine niedrigere Siedetemperatur bei Umgebungsdruck aufweist.

Neben dem Ventil 23 in der Dampfleitung 21 zum Einstellen des Drucks ist es auch möglich, zum Beispiel ein Ventil im Bereich des Ablaufs 19 vorzusehen, über das der entstehende Dampf aus dem Temperierkreislauf 11 ausgetragen werden kann. Das Einstellen des Drucks erfolgt in diesem Fall über das zusätzliche, hier nicht dargestellte Ventil. Vorzugsweise erfolgt durch das Abkühlen eine Kühlung des Reaktionsmediums in den Rohren auf eine Temperatur, bei der die Reaktion gestoppt wird, oder es muss noch so lange gekühlt werden, bis alle in den Rohren noch enthaltenen Edukte reagiert haben. Dies ist insbesondere für den Fall ausreichend, wenn die Eduktzufuhr über den Zulauf 7 auch bei Energieausfall gestoppt werden kann. Aus diesem Grund wird die Menge an Temperiermittel, die im Vorratsbehälter 13 enthalten ist, so gewählt, dass ein Herunterkühlen des Reaktors 1 auf jeden Fall gewährleistet werden kann. Um ein Durchströmen des Reaktors 1 auch bei Ausfall der Energieversorgung, d. h. bei stehender Pumpe 17 zu ermöglichen, wird der Vorratsbehälter 13 vorzugsweise in einer Höhe angebracht, dass der Flüssigkeitsspiegel 25 des im Vorratsbehälter 13 enthaltenen Temperiermittels mindestens auf gleicher Höhe liegt wie der Flüssigkeitsspiegel des Temperiermittels im Außenraum des Reaktors 1. Alternativ ist es auch möglich, insbesondere dann, wenn der entstehende Dampf nicht in den Vorratsbehälter zurückgeführt wird, sondern an die Umgebung abgegeben wird, den Vorratsbehälter 13 so zu positionieren, dass der Flüssigkeitsspiegel 25 in dem Vorratsbehälter 13 höher ist als der Flüssigkeitsspiegel im Außenraum des Reaktors 1.

In Figur 2 ist ein Ausschnitt einer Rohrplatte mit darin befestigten Rohren dargestellt.

Jeweils mit ihren Enden sind die Rohre 31 des Reaktors 1 in einer Rohrplatte 33 befestigt. Das Befestigen der Rohre 31 in der Rohrplatte 33 erfolgt im Allgemeinen mit Hilfe einer Schweißnaht 35. Hierzu sind in der Rohrplatte 33 Durchgangsöffnungen 37 ausgebildet, durch die die Rohre 31 geführt sind. Mit Hilfe der Schweißnaht 35 wird jedes Rohr 31 formschlüssig in der Rohrplatte 33 befestigt, wobei die Schweißnaht 35 gleichzeitig eine gas- und flüssigkeitsdichte Verbindung darstellt, damit kein Reaktionsmedium aus dem Verteilerraum 3 bzw. Sammelraum 5 durch die Durchgangsöffnung 37 zwischen Rohr 31 und Rohrplatte 33 in den Außenraum 39 des Reaktors 1 eindringen kann. Gleichzeitig wird hierdurch auch vermieden, dass Temperiermedium aus dem Außenraum 39 durch die Durchgangsöffnung 37 zwischen Rohr 31 und Rohrplatte 33 in den Verteilerraum 3 bzw. Sammelraum 5 gelangen kann.

Die Rohrplatte 33 ist vorzugsweise aus einem niedrig legierten, warmfesten Stahl gefertigt. Die Dicke d der Rohrplatte 33 ist abhängig vom Durchmesser des Reaktors 1 und der Länge der Rohre 31. Üblicherweise beträgt die Dicke d der Rohrplatte 33 bis zu 600 mm.

Erfindungsgemäß ist die Rohrplatte 33 mit einer Plattierung 41 versehen. Die Plattierung 41 ist vorzugsweise aus einer Nickel-Basislegierung gefertigt. Zum Aufbringen der Plattierung 41 auf die Rohrplatte 33 wird die Nickel-Basislegierung vorzugsweise durch ein Auftragsschweißverfahren, Walzen oder Sprengplattieren aufgebracht. Hierzu wird die Nickel-Basislegierung als Schweißzusatz auf die Rohrplatte 33 aufgeschweißt. In Abhängigkeit von der Dicke der Plattierung, die abhängig von der Dicke der Wandungen der Rohre 31 und damit der Tiefe der Schweißnaht 35 ist, erfolgt das Aufbringen der Nickel-Basislegierung in mehreren Schichten. Die Dicke der Plattierung 41 beträgt üblicherweise bis zu 20 mm. Eine ebene Oberfläche wird dadurch erzielt, dass die Plattierung zunächst in einer größeren Dicke aufgebracht wird und anschließend durch geeignete Verfahren auf die Enddicke gebracht wird. Zum Abtragen und Vergleichmäßigen der Oberfläche 41 eignen sich zum Beispiel Fräs- und Schleifverfahren.

Als Material für die Rohre 31 wird vorzugsweise ein austenitischer Werkstoff, ein hochlegierter Stahl oder ein Nickelbasiswerkstoff eingesetzt. Dieser weist eine hinreichend große Zähigkeit auf, um ein Beschädigen der Rohre 31 durch Temperaturausdehnung und aufgrund unterschiedlicher Temperaturausdehnungen von Rohren 31 und Außenmantel auftretenden Spannungen zu vermeiden. Die Rohre 31 werden in der Plattierung 41 eingeschweißt.

Die Plattierung 41 aus der Nickel-Basislegierung dient insbesondere bei Einsatz von aggressiven Medien als Reaktionsmedium als Korrosionsschutz. Ein weiterer Vorteil der Plattierung aus der Nickel-Basislegierung ist, dass bei einem Austausch von Reaktorrohren 31 diese auf einfache Weise erneut eingeschweißt werden können, ohne dass ein Warmglühen des Reaktors zum Ausgleich von Spannungen durchgeführt werden muss, da das Grundmaterial, insbesondere der niedrig legierte, warmfeste Stahl der Rohrplatte 33, durch das Einschweißen des Rohres 31 nicht aufgeschmolzen wird.

Der Außenmantel des Reaktors 1 wird vorzugsweise mit der Rohrplatte 33 verschweißt Alternativ kann am Außenmantel des Reaktors 1 ein Flanschkranz angebracht werden, mit dessen Hilfe der Mantel an der Rohrplatte angeschraubt werden kann. Zur Abdichtung wird zwischen dem Flansch des Außenmantels und der Rohrplatte ein Dichtelement, beispielsweise eine Flachdichtung, eingelegt.

An der dem Außenmantel gegenüberliegenden Seite der Rohrplatte wird im Allgemeinen ein Deckel des Reaktors befestigt. Durch den Deckel und die Rohrplatte 33 wird auf der einen Seite der Verteilerraum 3, auf der anderen Seite der Sammelraum 5 gebildet. Die Befestigung des Deckels mit der Rohrplatte 33 erfolgt im Allgemeinen mit Hilfe einer Schraubverbindung, die ein Lösen des Deckels für den Austausch des Katalysators ermöglicht. Zwischen dem Deckel und der Rohrplatte wird bevorzugt ein Dichtelement eingesetzt, das für Anwendungen im vorgesehenen Druckbereich geeignet ist. Bei dem Dichtelement handelt es sich bevorzugt um eine federelastische Metalldichtung, eine sogenannte Helicoflex-Dichtung, die in eine im Deckel eingedrehte Nut eingelegt wird. Alternativ kann die Abdichtung auch ohne Dichtelement erfolgen, wobei in diesem Fall schräg angestellte Absätze in Deckel und Rohrplatte einzuarbeiten sind, die sich beim Anziehen der zwischen Deckel und Rohrplatte vorhandenen Schrauben zu einem Dichtsystem verkeilen.

### Bezugszeichenliste

- 1: Reaktor
- 3: Verteilerraum
- 5: Sammelraum
- 7: Zulauf
- 9: Ablauf
- 11: Temperierkreislauf
- 13: Vorratsbehälter
- 15: Zuleitung
- 17: Pumpe
- 19: Ablauf
- 21: Dampfleitung
- 23: Ventil
- 25: Flüssigkeitsspiegel
- 31: Rohr
- 33: Rohrplatte
- 35: Schweißnaht
- 37: Durchgangsöffnung
- 39: Außenraum
- 41: Plattierung

- d: Dicke der Rohrplatte 33

## Patentansprüche

1. Reaktor zur Durchführung von Hochdruckreaktionen, wobei der Reaktor für einen Druckbereich von 100 bis 325 bar ausgelegt ist, umfassend mindestens ein Rohr (31), das mit seinen Enden jeweils durch eine Rohrplatte (33) geführt ist und mit der Rohrplatte (33) verbunden ist, wobei die Rohrplatten (33) und das mindestens eine Rohr (31) von einem Außenmantel umschlossen sind, so dass zwischen dem Rohr (31) und dem Außenmantel ein Außenraum (39) ausgebildet ist, **dadurch gekennzeichnet, dass** die Rohrplatten (33) jeweils mindestens eine Oberfläche aus einer Nickel-Basislegierung aufweisen und das mindestens eine Rohr (31) jeweils an die Oberfläche aus der Nickel-Basislegierung angeschweißt ist, wobei die Oberfläche aus der Nickel-Basislegierung jeweils in Richtung des jeweiligen Reaktorendes weist und der Außenmantel eine Dicke aufweist, die ausreichend ist, bei einer unterschiedlichen Dehnung aufgrund einer Temperaturdifferenz zwischen Rohr (31) und Außenmantel auftretende Zugkräfte aufzunehmen.

2. Reaktor gemäß Anspruch 1, **dadurch gekennzeichnet, dass** die Nickel-Basislegierung als Plattierung (41) auf die Rohrplatten (33) aufgetragen ist, wobei die Plattierung (41) vorzugsweise eine Dicke von bis zu 30 mm aufweist.

3. Reaktor gemäß Anspruch 1 oder 2, **dadurch gekennzeichnet, dass** die Rohrplatten (33) einen Durchmesser von bis zu 2400 mm und eine Dicke (d) von bis zu 600 mm aufweisen und/oder dass das mindestens eine Rohr (31) eine Länge im Bereich von 3000 bis 18000 mm aufweist.

4. Reaktor gemäß einem der Ansprüche 1 bis 3, **dadurch gekennzeichnet, dass** das mindestens eine Rohr (31) aus einem austenitischen Werkstoff gefertigt ist.

5. Reaktor gemäß einem der Ansprüche 1 bis 4, **dadurch gekennzeichnet, dass** der Außenraum (39) mit einem Temperiermittelkreislauf (11) verbunden ist, wobei der Temperiermittelkreislauf (11) einen Vorratsbehälter (13) für das Temperiermittel umfasst, der mindestens in einer solchen Höhe angeordnet ist, dass das Temperiermittel aufgrund des hydraulischen Drucks der Flüssigkeit den Außenraum (39) des Reaktors durchströmen kann, und wobei der Temperierkreislauf eine Pumpe (17) umfasst, die als Freilaufpumpe ausgebildet ist.

6. Reaktor gemäß einem der Ansprüche 1 bis 5, **dadurch gekennzeichnet, dass** am Außenmantel und im Inneren des mindestens einen Rohres (31) Thermoelemente angeordnet sind.

7. Reaktor gemäß einem der Ansprüche 1 bis 6, **dadurch gekennzeichnet, dass** der Reaktor (1) ein Rohrbündelreaktor ist, wobei vorzugsweise im Einlaufbereich der Rohre (31) des Rohrbündelreaktors Einbauten enthalten sind, um zugeführte Edukte gleichmäßig auf die Rohre (31) zu verteilen.

8. Reaktor gemäß einem der Ansprüche 1 bis 7, **dadurch gekennzeichnet, dass** im Außenraum (39) Einbauten zur Einstellung der Strömung des Temperiermittels angeordnet sind, wobei die Einbauten vorzugsweise Lochbleche sind.

9. Verfahren zur Inbetriebnahme eines Reaktors (1) gemäß einem der Ansprüche 1 bis 8, wobei das mindestens eine Rohr (31) mit einem Katalysator als Reaktorbett befüllt ist, der durch eine Hydrierung mit Wasserstoff aktiviert wird, und der Außenraum (39) mit Wasser befüllt ist, folgende Schritte umfassend:
a. Aufheizen des Katalysators auf eine Temperatur im Bereich von 120 bis 170°C bei einem Druck im Bereich von 120 bis 170 bar in Gegenwart einer Stickstoffatmosphäre mit einer Rate von 5 bis 15 K/h und gleichzeitiges Erhöhen der Temperatur des Wassers im Außenraum (39) durch Zufuhr von Heizdampf und Erhöhung des Drucks, so dass die Siedetemperatur des Wassers im Außenraum der Temperatur im Inneren des Rohres (31) entspricht,
b. Zufuhr von Wasserstoff, bis eine Konzentration an Wasserstoff von 1 bis 3 Vol.-% erreicht ist und Halten der Atmosphäre für einen Zeitraum von 5 bis 8 h, danach Erhöhen der Wasserstoffkonzentration auf 4 bis 6 Vol.-% und halten der Atmosphäre für einen Zeitraum von 5 bis 8 h,
c. Erhöhen der Wasserstoffkonzentration auf 8 bis 12 Vol.-% und halten der Konzentration, bis die Temperatur im Reaktorbett im Wesentlichen konstant bleibt, danach Erhöhen der Wasserstoffkonzentration auf 45 bis 55 Vol.-%
d. Erhöhen des Drucks im Inneren des mindestens einen Rohres (31) auf 150 bis 280 bar und Erhöhen der Temperatur des durch die Rohre (31) geleiteten Wasserstoff enthaltenden Gases auf 200 bis 230 °C mit einer Rate von 5 bis 15 K/h sowie Erhöhung der Temperatur im Außenraum (39) durch Zufuhr von Heizdampf und Erhöhung des Drucks, so das die Siedetemperatur des Wassers im Außenraum (39) der Temperatur im Rohr (31) entspricht,
e. Ersetzen des Wasser/Dampf-Gemischs im Außenraum (39) durch trocken gesättigten Wasserdampf,
f. Erhöhen der Temperatur im Rohrinneren auf 250 bis 300 °C mit einer Rate von 2 bis 8 K/h und Halten der Temperatur für einen Zeitraum von 20 bis 30 h,
g. Absenken der Temperatur im Rohrinneren mit einer Rate von 5 bis 15 K/h und gleichzeitiges Absenken der Temperatur im Außenraum (39) durch Senken des Drucks.

10. Verfahren gemäß Anspruch 9, **dadurch gekennzeichnet, dass** vor der Aktivierung des Katalysators eine Reinigung des Außenraumes (39) durchgeführt wird, die vorzugsweise folgende Schritte umfasst:
a. Füllen des Außenraums (39) mit entionisiertem Wasser, Impfen des Wassers mit 0,001 bis 0,004 kg eines Passivierungsmittels pro kg Wasser, Erwärmung auf 110 bis 150 °C mit einer Rate von 5 bis 15 K/h, Umwälzen der Lösung über einen Zeitraum von 20 bis 30 h, Abkühlen mit einer Rate von 5 bis 15 K/h auf eine Temperatur im Bereich von 90 bis 110 °C und Ablassen der Lösung durch Zufuhr eines inerten Gases,
b. Füllen des Außenraumes (39) mit entionisiertem Wasser mit einer Temperatur im Bereich von 80 bis 100°C, Impfen mit 0,0005 bis 0,004 kg eines Passivierungsmittels pro kg Wasser, Erwärmung auf 110 bis 150 °C mit einer Rate von 5 bis 15 K/h, Umwälzen der Lösung über einen Zeitraum von 20 bis 30 h, Abkühlen mit einer Rate von 5 bis 15 K/h auf eine Temperatur im Bereich von 90 bis 110 °C und Ablassen der Lösung durch Zufuhr eines inerten Gases,
c. gegebenenfalls Wiederholen des Schrittes (b) bis die Konzentration an Eisenionen in der Lösung am Ende des Umwälzens einen asymptotischen Verlauf zeigt.
d. Spülen des Außenraumes mit entionisiertem Wasser mit einer Temperatur von 70 bis100 °C für einen Zeitraum von 0,5 bis 2 h,
e. gegebenenfalls Wiederholen des Schrittes (d), bis eine elektrische Leitfähigkeit des Wassers am Ende des Spülvorganges von maximal 20 µS/cm gemessen wird.

11. Verfahren zur Durchführung einer exothermen Reaktion in einem Reaktor (1) gemäß einem der Ansprüche 1 bis 8, wobei dem mindestens einen Rohr (31) mindestens ein Edukt als Reaktionsmedium zugegeben wird, das im Rohr (31) zumindest teilweise zu einem Produkt reagiert, und dem Außenraum (39) ein Temperiermittel zugegeben wird und das Temperiermittel bei einer im Wesentlichen konstanten Temperatur durch Wärmeaufnahme verdampft, so dass die Reaktion unter im Wesentlichen isothermen Bedingungen durchgeführt wird, wobei das Temperiermittel und das Reaktionsmedium vorzugsweise im Gleichstrom durch den Reaktor (1) geführt werden.

12. Verfahren gemäß Anspruch 11, **dadurch gekennzeichnet, dass** bei einem Ausfall der Energieversorgung Temperiermittel aus dem Vorratsbehälter (13) aufgrund des hydraulischen Drucks durch den Außenraum (39) des Reaktors (1) geleitet wird, wobei vorzugsweise der Druck im Außenraum (39) abgesenkt wird.

13. Verfahren gemäß Anspruch 11 oder 12, **dadurch gekennzeichnet, dass** die Reaktion bei einer Temperatur im Bereich von 130 bis 300°C durchgeführt wird.

14. Verfahren gemäß einem der Ansprüche 11 bis 13, **dadurch gekennzeichnet, dass** als Edukte Diethylenglykol und Ammoniak zugegeben werden, die zu Aminodiglykol und Morpholin umgesetzt werden oder das als Edukte Polyetheralkohole und Ammoniak eingesetzt werden, die zu den entsprechenden Polyetheraminen umgesetzt werden oder das als Edukte Ethanol, Propanole oder Butanole sowie Ammoniak eingesetzt werden, die zu den entsprechenden Ethylaminen, Propylaminen oder Butylaminen umgesetzt werden.

15. Verfahren gemäß einem der Ansprüche 11 bis 14, **dadurch gekennzeichnet, dass** der Druck im Außenraum (39) des Reaktors (1) im Bereich von 4,76 bis 86 bar (abs) liegt.

16. Verfahren gemäß einem der Ansprüche 11 bis 15, **dadurch gekennzeichnet, dass** als Temperiermittel Wasser, ein Wasser-Alkohol-Gemisch oder ein Thermalöl eingesetzt wird.

## Claims

1. A reactor for performing high-pressure reactions, the reactor being designed for a pressure range from 100 to 325 bar, comprising at least one tube (31) whose ends are each conducted through a tube plate (33) and which is bonded to the tube plate (33), the tube plates (33) and the at least one tube (31) being surrounded by an outer jacket, such that an outer space (39) is formed between the tube (31) and the outer jacket, wherein the tube plates (33) each have at least one surface composed of a nickel-base alloy and the at least one tube (31) is in each case welded on to the surface composed of the nickel-base alloy, the surface composed of the nickel-base alloy pointing in each case in the direction of the particular reactor end and the outer jacket having a thickness which is sufficient to absorb tensile forces which occur between tube (31) and outer jacket owing to a temperature difference in the event of different expansion.

2. The reactor according to claim 1, wherein the nickel-base alloy is applied to the tube plates (33) as a plating (41), and the plating (41) preferably has a thickness of up to 30 mm.

3. The reactor according to claim 1 to 2, wherein the tube plates (33) have a diameter of up to 2400 mm and a thickness (d) of up to 600 mm and/or wherein the at least one tube (31) has a length in the range from 3000 to 18 000 mm.

4. The reactor according to any of claims 1 to 3, wherein the at least one tube (31) is manufactured from an austenitic material.

5. The reactor according to any of claims 1 to 4, wherein the outer space (39) is connected to a temperature control medium circuit (11), said temperature control medium circuit (11) comprising a reservoir vessel (13) for the temperature control medium, which is arranged at least at such a height that the temperature control medium can flow through the outer space (39) of the reactor owing to the hydraulic pressure of the liquid, and the temperature control circuit comprising a pump (17), which is configured as a free-running pump.

6. The reactor according to any of claims 1 to 5, wherein thermocouples are arranged on the outer jacket and inside the at least one tube (31).

7. The reactor according to any of claims 1 to 6, wherein the reactor (1) is a tube bundle reactor, and internals are preferably present in the intake region of the tubes (31) of the tube bundle reactor in order to distribute reactants supplied uniformly between the tubes (31).

8. The reactor according to any of claims 1 to 7, wherein internals are arranged in the outer space (39) to adjust the flow of the temperature control medium, the internals preferably being perforated plates.

9. A process for starting up a reactor (1) according to any of claims 1 to 8, the at least one tube (31) being filled with a catalyst as a reactor bed which is activated by a hydrogenation with hydrogen, and the outer space (39) being filled with water, comprising the following steps:
a. heating the catalyst to a temperature in the range from 120 to 170°C at a pressure in the range from 120 to 170 bar in the presence of a nitrogen atmosphere at a rate of from 5 to 15 K/h and simultaneously increasing the temperature of the water in the outer space (39) by supplying steam and increasing the pressure, such that the boiling point of the water in the outer space corresponds to the temperature inside the tube (31),
b. supplying hydrogen until a concentration of hydrogen of from 1 to 3% by volume has been attained and holding the atmosphere for a period of from 5 to 8 h, then increasing the hydrogen concentration to from 4 to 6% by volume and holding the atmosphere for a period of from 5 to 8 h,
c. increasing the hydrogen concentration to from 8 to 12% by volume and holding the concentration until the temperature in the reactor bed remains essentially constant, then increasing the hydrogen concentration to from 45 to 55% by volume,
d. increasing the pressure inside the at least one tube (31) to from 150 to 280 bar and increasing the temperature of the hydrogen-comprising gas passed through the tubes (31) to from 200 to 230°C at a rate of from 5 to 15 K/h and increasing the temperature in the outer space (39) by supplying steam and increasing the pressure, such that the boiling point of the water in the outer space (39) corresponds to the temperature in the tube (31),
e. replacing the water-steam mixture in the outer space (39) with dry saturated water vapor,
f. increasing the temperature in the tube interior to from 250 to 300°C at a rate of from 2 to 8 K/h and holding the temperature for a period of from 20 to 30 h,
g. lowering the temperature in the tube interior at a rate of from 5 to 15 K/h and simultaneously lowering the temperature in the outer space (39) by lowering the pressure.

10. The process according to claim 9, wherein the activation of the catalyst is preceded by performance of cleaning of the outer space (39), said cleaning operation preferably comprising the following steps:
a. filling the outer space (39) with deionized water, seeding the water with from 0.001 to 0.004 kg of a passivating agent per kg of water, heating to from 110 to 150°C at a rate of from 5 to 15 K/h, circulating the solution over a period of from 20 to 30 h, cooling at a rate of from 5 to 15 K/h to a temperature in the range from 90 to 110°C, and discharging the solution by supplying an inert gas,
b. filling the outer space (39) with deionized water having a temperature in the range from 80 to 100°C, seeding with from 0.0005 to 0.004 kg of a passivating agent per kg of water, heating to from 110 to 150°C at a rate of from 5 to 15 K/h, circulating the solution over a period of from 20 to 30 h, cooling at a rate of from 5 to 15 K/h to a temperature in the range from 90 to 110°C and discharging the solution by supplying an inert gas,
c. optionally repeating step (b) until the concentration of iron ions in the solution at the end of the circulation exhibits an asymptotic profile,
d. flushing the outer space with deionized water having a temperature of from 70 to 100°C for a period of from 0.5 to 2 h,
e. optionally repeating step (d) until an electrical conductivity of the water at the end of the flushing operation of not more than 20 µS/cm is measured.

11. A process for performing an exothermic reaction in a reactor (1) according to any of claims 1 to 8, in which at least one reactant as the reaction medium is added to the at least one tube (31) and reacts in the tube (31) at least partly to give a product, and a temperature control medium is added to the outer space (39) and the temperature control medium evaporates by absorbing heat at essentially constant temperature, such that the reaction is performed under essentially isothermal conditions, and the temperature control medium and the reaction medium are preferably conducted through the reactor (1) in cocurrent.

12. The process according to claim 11, wherein, in the event of outage in the power supply, temperature control medium from the reservoir vessel (13) is passed through the outer space (39) of the reactor (1) owing to the hydraulic pressure, and the pressure in the outer space (39) is preferably lowered.

13. The process according to claim 11 or 12, wherein the reaction is performed at a temperature in the range from 130 to 300°C.

14. The process according to any of claims 11 to 13, wherein the reactants added are diethylene glycol and ammonia, which are converted to aminodiglycol and morpholine, or wherein the reactants used are polyether alcohols and ammonia, which are converted to the corresponding polyetheramines, or wherein the reactants used are ethanol, propanols or butanols and ammonia, which are converted to the corresponding ethylamines, propylamines or butylamines.

15. The process according to any of claims 11 to 14, wherein the pressure in the outer space (39) of the reactor (1) is in the range from 4.76 to 86 bar (abs).

16. The process according to any of claims 11 to 15, wherein the temperature control medium used is water, a water-alcohol mixture or a thermal oil.

## Revendications

1. Réacteur pour la réalisation de réactions sous pression élevée, le réacteur étant conçu pour une plage de pression de 100 à 325 bar, comprenant au moins un tube (31), qui traverse une plaque tubulaire (33) à chacune de ses extrémités et qui est relié avec la plaque tubulaire (33), les plaques tubulaires (33) et le ou les tubes (31) étant entourés par une enveloppe externe, de manière à former un espace externe (39) entre le tube (31) et l'enveloppe externe, **caractérisé en ce que** les plaques tubulaires (33) présentent chacune au moins une surface en un alliage à base de nickel et le ou les tubes (31) sont chacun soudés sur la surface en l'alliage à base de nickel, la surface en l'alliage à base de nickel étant à chaque fois dirigée vers l'extrémité respective du réacteur et l'enveloppe externe présentant une épaisseur qui est suffisante pour absorber les forces de traction qui se produisent en raison d'une différence d'expansion due à une différence de température entre le tube (31) et l'enveloppe externe.

2. Réacteur selon la revendication 1, **caractérisé en ce que** l'alliage à base de nickel est appliqué sur les plaques tubulaires (33) sous la forme d'un plaquage (41), le plaquage (41) présentant de préférence une épaisseur allant jusqu'à 30 mm.

3. Réacteur selon la revendication 1 ou 2, **caractérisé en ce que** les plaques tubulaires (33) présentent un diamètre allant jusqu'à 2 400 mm et une épaisseur (d) allant jusqu'à 600 mm et/ou **en ce que** le ou les tubes (31) présentent une longueur dans la plage allant de 3 000 à 18 000 mm.

4. Réacteur selon l'une quelconque des revendications 1 à 3, **caractérisé en ce que** le ou les tubes (31) sont fabriqués en un matériau austénitique.

5. Réacteur selon l'une quelconque des revendications 1 à 4, **caractérisé en ce que** l'espace externe (39) est relié avec un circuit d'agent de conditionnement (11), le circuit d'agent de conditionnement (11) comprenant un contenant de stockage (13) pour l'agent de conditionnement, qui est placé au moins à une hauteur telle que l'agent de conditionnement puisse traverser l'espace externe (39) du réacteur grâce à la pression hydraulique du liquide, et le circuit de conditionnement comprenant une pompe (17) qui est conçue sous la forme d'une pompe à roue libre.

6. Réacteur selon l'une quelconque des revendications 1 à 5, **caractérisé en ce que** des thermoéléments sont placés sur l'enveloppe externe et à l'intérieur du ou des tubes (31).

7. Réacteur selon l'une quelconque des revendications 1 à 6, **caractérisé en ce que** le réacteur (1) est un réacteur à faisceau de tubes, des composants permettant de répartir uniformément les réactifs introduits sur les tubes (31) étant de préférence contenus dans la zone d'entrée des tubes (31) du réacteur à faisceau de tubes.

8. Réacteur selon l'une quelconque des revendications 1 à 7, **caractérisé en ce que** des composants destinés à ajuster l'écoulement de l'agent de conditionnement sont placés dans l'espace externe (39), les composants étant de préférence des plaques perforées.

9. Procédé de mise en service d'un réacteur (1) selon l'une quelconque des revendications 1 à 8, dans lequel le ou les tubes (31) sont remplis avec un catalyseur en tant que lit de réacteur, qui est activé par une hydrogénation avec de l'hydrogène, et l'espace externe (39) est rempli avec de l'eau, comprenant les étapes suivantes :
a. le chauffage du catalyseur à une température dans la plage allant de 120 à 170 °C, à une pression dans la plage allant de 120 à 170 bar, en présence d'une atmosphère d'azote, à une vitesse de 5 à 15 K/h, et l'élévation simultanée de la température de l'eau dans l'espace externe (39) par introduction de vapeur de chauffage et élévation de la pression, de manière à ce que la température d'ébullition de l'eau dans l'espace externe corresponde à la température à l'intérieur du tube (31),
b. l'introduction d'hydrogène jusqu'à atteindre une concentration en hydrogène de 1 à 3 % en volume et le maintien de l'atmosphère pendant une durée de 5 à 8 h, puis l'élévation de la concentration en hydrogène à 4 à 6 % en volume et le maintien de l'atmosphère pendant une durée de 5 à 8 h,
c. l'élévation de la concentration en hydrogène à 8 à 12 % en volume et le maintien de la concentration jusqu'à ce que la température dans le lit de réacteur reste essentiellement constante, puis l'élévation de la concentration en hydrogène à 45 à 55 % en volume,
d. l'élévation de la pression à l'intérieur du ou des tubes (31) à 150 à 280 bar et l'élévation de la température du gaz contenant de l'hydrogène traversant les tubes (31) à 200 à 230 °C à une vitesse de 5 à 15 K/h, ainsi que l'élévation de la température dans l'espace externe (39) par introduction de vapeur de chauffage et élévation de la pression, de manière à ce que la température d'ébullition de l'eau dans l'espace externe (39) corresponde à la température dans le tube (31),
e. le remplacement du mélange eau/vapeur dans l'espace externe (39) par de la vapeur d'eau saturée sèche,
f. l'élévation de la température à l'intérieur du tube à 250 à 300 °C à une vitesse de 2 à 8 K/h et le maintien de la température pendant une durée de 20 à 30 h,
g. l'abaissement de la température à l'intérieur du tube à une vitesse de 5 à 15 K/h et l'abaissement simultané de la température dans l'espace externe (39) par abaissement de la pression.

10. Procédé selon la revendication 9, **caractérisé en ce qu'**un nettoyage de l'espace externe (39) est réalisé avant l'activation du catalyseur, qui comprend de préférence les étapes suivantes :
a. le remplissage de l'espace externe (39) avec de l'eau déionisée, l'inoculation de l'eau avec 0,001 à 0,004 kg d'un agent de passivation par kg d'eau, le réchauffement à 110 à 150 °C à une vitesse de 5 à 15 K/h, la mise en circulation de la solution pendant une durée de 20 à 30 h, le refroidissement à une vitesse de 5 à 15 K/h à une température dans la plage allant de 90 à 110 °C et le déchargement de la solution par introduction d'un gaz inerten,
b. le remplissage de l'espace externe (39) avec de l'eau déionisée à une température dans la plage allant de 80 à 100 °C, l'inoculation avec 0,0005 à 0,004 kg d'un agent de passivation par kg d'eau, le réchauffement à 110 à 150 °C à une vitesse de 5 à 15 K/h, la mise en circulation de la solution pendant une durée de 20 à 30 h, le refroidissement à une vitesse de 5 à 15 K/h à une température dans la plage allant de 90 à 110 °C et le déchargement de la solution par introduction d'un gaz inerte,
c. éventuellement la répétition de l'étape (b) jusqu'à ce que la concentration en ions fer dans la solution à la fin de la mise en circulation présente un comportement asymptotique,
d. le rinçage de l'espace externe avec de l'eau déionisée à une température de 70 à 100 °C pendant une durée de 0,5 à 2 h,
e. éventuellement la répétition de l'étape (d) jusqu'à la mesure d'une conductivité électrique de l'eau à la fin du processus de rinçage d'au plus 20 µS/cm.

11. Procédé de réalisation d'une réaction exothermique dans un réacteur (1) selon l'une quelconque des revendications 1 à 8, dans lequel au moins un réactif est introduit en tant que milieu réactionnel dans le ou les tubes (31), réagit au moins en partie dans le tube (31) pour former un produit, et un agent de conditionnement est introduit dans l'espace externe (39) et l'agent de conditionnement est évaporé à une température essentiellement constante par absorption de chaleur, de manière à ce que la réaction soit réalisée en conditions essentiellement isothermes, l'agent de conditionnement et le milieu réactionnel étant de préférence mis en circulation à co-courant dans le réacteur (1).

12. Procédé selon la revendication 11, **caractérisé en ce qu'**en cas de défaillance de l'approvisionnement en énergie, de l'agent de conditionnement est introduit dans la chambre externe (39) du réacteur (1) à partir du contenant de stockage (13) grâce à la pression hydraulique, la pression dans l'espace externe (39) étant de préférence abaissée.

13. Procédé selon la revendication 11 ou 12, **caractérisé en ce que** la réaction est réalisée à une température dans la plage allant de 130 à 300 °C.

14. Procédé selon l'une quelconque des revendications 11 à 13, **caractérisé en ce que** du diéthylène glycol et de l'ammoniac sont introduits en tant que réactifs, qui sont transformés en aminodiglycol et morpholine, ou **en ce que** des polyéther-alcools et de l'ammoniac sont utilisés en tant que réactifs, qui sont transformés en les polyéther-amines correspondantes, ou **en ce que** de l'éthanol, des propanols ou des butanols et de l'ammoniac sont utilisés en tant que réactifs, qui sont transformés en les éthylamines, propylamines ou butylamines correspondantes.

15. Procédé selon l'une quelconque des revendications 11 à 14, **caractérisé en ce que** la pression dans l'espace externe (39) du réacteur (1) se situe dans la plage allant de 4,76 à 86 bar (abs).

16. Procédé selon l'une quelconque des revendications 11 à 15, **caractérisé en ce que** de l'eau, un mélange eau-alcool ou une huile thermique est utilisé en tant qu'agent de conditionnement.
